(19) Europäisches Patentamt

European Patent Office

Office européen des brevets

(11) **EP 1 537 525 B1**

(12) **EUROPEAN PATENT SPECIFICATION**

(45) Date of publication and mention
of the grant of the patent:
**09.01.2008 Bulletin 2008/02**

(51) Int Cl.:
**G06K 19/06** *(2006.01)*     **G06K 19/12** *(2006.01)*

(21) Application number: **03795084.7**

(22) Date of filing: **10.09.2003**

(86) International application number:
**PCT/GB2003/003938**

(87) International publication number:
**WO 2004/025549 (25.03.2004 Gazette 2004/13)**

(54) **SECURITY DEVICE AND SYSTEM**

SICHERHEITSEINRICHTUNG UND SYSTEM

DISPOSITIF ET SYSTEME DE SECURITE

(84) Designated Contracting States:
**AT BE BG CH CY CZ DE DK EE ES FI FR GB GR HU IE IT LI LU MC NL PT RO SE SI SK TR**

(30) Priority: **10.09.2002 GB 0220907**

(43) Date of publication of application:
**08.06.2005 Bulletin 2005/23**

(73) Proprietors:
• **Ingenia Holdings Limited**
  **Road Town, Tortola (VG)**
• **INGENIA TECHNOLOGY LIMITED**
  **London EC1N 8JA (GB)**

(72) Inventor: **COWBURN, Russell Paul,**
**University of Durham**
**Durham DH1 3LE (GB)**

(74) Representative: **Haines, Miles John L.S. et al**
**D Young & Co**
**120 Holborn**
**London EC1N 2DY (GB)**

(56) References cited:
**EP-A- 0 310 707**       **EP-A- 0 914 970**
**WO-A-01/97168**       **US-A- 4 146 664**

**EP 1 537 525 B1**

## Description

The present invention relates to security devices and methods. In particular, the present invention relates to security devices and methods for identifying unauthorised copying of goods etc. to which such security devices are applied.

As is known, and discussed herein, copying of various products such as, for example, documents, passports and goods etc., is a common problem. Counterfeiters and/or pirates often copy items having various levels of copy protection and have become increasingly adept at evading existing higher level copy protection schemes. For example, they are increasingly copying items such as credit cards by reproduction of magnetic strips, passports with holograms etc.

Various aspects and embodiments of the invention seek to provide a way for improving detection of copied items to reduce the effects of counterfeiting.

According to a first aspect of the invention, there is provided a security device comprising at least one magnetic element. The at least one magnetic element is responsive to an applied magnetic field to provide a characteristic response. This characteristic response is inherently difficult to reproduce as it depends upon uncontrollable nano-scale variations in the structure of the magnetic elements. Thus, a skilled scientist, even one who understands the technology, cannot copy such security devices using current technology, even if he wanted to. The inherent variability of such nano-scale variations may also provide that many such characteristic responses are obtained for individual security devices, thereby ensuring that a brute-force approach to reproducing them requires an extremely large number of such devices to be made before an acceptable copy can be made. (e.g. it may be necessary to produce millions or billions of such devices before a suitable copy is made)

Security devices may be provided with an identifier to identify an individual security device. Identifiers may be unique. Where unique identifiers are provided, any attempt at brute force copying requires a copier to make an extremely large number of devices for each identifier before one acceptable copy can be made. Hence a copier cannot readily simply stock a large number of devices and select ones with matching characteristic responses unless he stocks a large number per identifier: e.g. where there is a 1 in $2 \times 10^6$ chance of randomly copying a security device and $2^{32}$ identifiers are provided, a forger has to produce $2 \times 10^6 \times 2^{32}$ identifiers to have an even chance of copying a single security device: this number is enormous: i.e. 8,589,934,592,000,000. Hence, the difficulty in copying a given device becomes apparent.

Identifiers may be formed by the magnetic elements themselves. In various embodiments a pattern of one or more of the identifiers may be used to define a unique identifier. Such magnetic elements provide both the characteristic response and the unique identifier, making them even more difficult to copy as the characteristic response and the unique identifier are both provided, inseparably, by the same physical structure(s).

According to another aspect of the invention, there is provided a method of manufacturing a security device, comprising providing at least one magnetic element, wherein the at least one magnetic element provides a characteristic response in response to an applied magnetic field. The characteristic response provided may be used to provide a premeasured characteristic response that may subsequently be used in identification of the security device that generated it.

According to another aspect of the invention, there is provided a system for reading a security device, comprising: a magnetic field generation system for applying a magnetic field to a security device; and a detection system for measuring one or more parameters representative of a measured characteristic response of said security device in response to said magnetic field, wherein said system is operable to compare said one or more parameters representative of a measured characteristic response to one or more respective parameters of a premeasured characteristic response to determine whether respective measured and premeasured parameters are substantially equivalent.

According to another aspect of the invention, there is provided a method for reading a security device, comprising applying a magnetic field to a security device; measuring one or more parameters representative of a measured characteristic response of said security device in response to said magnetic field; and comparing said one or more parameters representative of a measured characteristic response to one or more respective parameter(s) of a premeasured characteristic response to determine whether respective measured and premeasured parameters are substantially equivalent.

Security devices can be incorporated into products etc. during manufacture and/or thereafter. They may be used to detect counterfeit goods, products etc. by comparing the premeasured characteristic response with a measured characteristic response. Various premeasured characteristic responses may be used to compare a premeasured characteristic response with a measured characteristic response for a security device according to an identifier associated with that security device.

Security devices can be incorporated into products such as, for example, one or more of: a document; a passport; an identity card; a compact disc; a digital versatile disc; a software product; packaging; an item of clothing; an item of footwear; a smart-card; a credit or bank card; a cosmetic item; an engineering part; an accessory; and any other goods and/or items of commerce, whether manufactured or otherwise. In order that counterfeit or forged variants thereof may be identified.

The term magnetic element is intended to include any element formed of any material that provides a measurable signal in response to an applied magnetic field, whether or not that material itself possesses an inherent magnetisation.

One aspect of the invention relates to a security device, for example to comprise an identification and/or authentication device for use in isolation or for use in association with, incorporated into or onto or attached to another article. The security device provides a characteristic response or signature for identification and/or authentication in a manner that limits or makes difficult the copying of the device, and consequently the copying or counterfeiting of any item used in association therewith. Another aspect of the invention relates to a data reader particularly suited to reading such a characteristic response/signature, to a method of producing/measuring such a characteristic response/signature in a security system including device and reader, and/or to an identification or authentication method using such a device and/or system.

A major loss of revenue to many businesses and a substantial source of criminal activity arises from illegal counterfeiting or copying of items. Examples include, but are not limited to:

- Copying cards and like devices used for paperless financial transactions such as credit card and bank cards to allow unauthorised transactions and withdrawals from ATMs;
- Forging and copying items used for identification, such as passports, visa documents, driving licenses, personal identity cards and the like;
- Copying material carried on a data storage medium, such as CD and DVD disks;
- Forging and copying official documents such as certificates;
- Duplicating smart cards used for identity/ access purposes, for example to control access to areas as part of a security system, to control access to services such as pay-TV, to control or log use of hardware such as computers or other office equipment in a multiple user environment;
- Copying security or authenticity labels as part of counterfeit goods manufacture, to make unauthorised and/or inferior copies of high-value branded goods, high specification safety-critical goods and the like.

This is a particularly identified problem in relation to cards and like devices used for paperless financial transactions and for identification purposes, and this area has led development of security systems, which are nevertheless likely to be generally applicable to most or all areas where copying is a problem.

As paperless commercial and general security systems have become more sophisticated, increased automation coupled with an increased information storage capacity on the item have created great opportunities for financial and identity fraud by copying of such documents. The concentration of wealth and/or information accessible through credit and bank cards and identity documents has increased. There has developed a growing need for accurate verification and identification such items and/or effective copy prevention.

Card and documentary systems in particular have adopted measures that improve security by making counterfeiting difficult or inconvenient This approach has concentrated in particular on incorporation of embedded devices on or in the card or other document which are difficult to copy effectively. Examples include holographic images, diffraction gratings, specialist substances (inks, materials etc), embossed structures, structures within the material of the card, etc.

Ultimately though, these markings can be copied by the sophisticated counterfeiter, and will be if the rewards are sufficient. There exists a general desire for a security marking that cannot practically be counterfeited.

An effective strategy against unauthorised copying of items exists if a *random signature* or characteristic response can be associated with the item or with a device that is attached to the item. The random signature/characteristic response could come from some uncontrollable manufacturing process that can never be duplicated precisely. Thus, there always exists some small difference between the original item and its copy; if this difference can be detected and compared with a previously measured response (e.g. a baseline response in which the response of individual magnetic elements are recorded separately, or the average response of a collection of such magnetic elements are recorded) taken from the original item, forgery can be identified.

There are 4 primary preferred requirements of a practical random signature:

- That it be possible to measure the signature easily and without excessive cost;
- That it be possible to represent the baseline signature easily, preferably by a small list of digital numbers.
- That there be a large degree of randomness inherent in the manufacture of the signature, such that every signature is slightly different;
- That it not be possible to control the manufacture of the signature so that its randomness could be stripped out or suppressed and an identical copy of an existing signature made.

Difficulties in achieving all of these requirements have to date limited the practical applicability of the concept on a wide scale in everyday systems.

Viewed from a first perspective the invention provides a security device for an item which is inherently difficult to copy and thus limits counterfeiting.

Viewed from another perspective the invention provides a security device for an item based upon a random signature which is readily manufactured and measurable on a scale and at a cost appropriate for everyday use in authentication/ counterfeit prevention of high value items.

Viewed from a further perspective the invention provides a data reader particularly suited to reading the signature of such a device.

Thus, according to the invention in a first aspect there is provided a security device comprising at least one and preferably a plurality and more preferably a large plurality of magnetic elements arrayed on a suitable substrate and having a machine readable magnetic signature response, provided in combination with a predetermined baseline magnetic signature response reading.

In various embodiments, the magnetic elements may comprise thin layer magnetic material, such as thin magnetic wires. The magnetic material may comprise macroscopic wires and/or dots, microscopic wires and/or dots and/or nanowires and/or nanodots, laid down in suitable form on a suitable substrate to give a machine readable magnetic marking, with a measurable baseline signature signal highly dependent upon the precise inherent structure. The predetermined recorded baseline signature response gives a comparative figure, an "expected" response which can be used in connection with a measured response to authenticate the device.

As used herein, "device" at its broadest comprises the magnetic element(s) as hereinbefore described to be laid down on a suitable substrate, such as, for example, the surface of an item to which a security device is to be applied. Examples of the application of such a device include without limitation such a device constituting or comprising a part of an object adapted for use in its own right as an identification, authentication, key or any other application; a device constituting or comprising part of such an object provided for use with a second object, in particular for example as an attachment thereto, for authentication, identification or other labelling, related security or other purposes; a device portion incorporated into or onto a second item for such identification, authentication or related security or other purposes. In particular, the device is provided to authenticate and impede/prevent unauthorised counterfeiting by copying or cloning of an article of which it forms a part, or with which it is associated.

Examples of suitable collections of magnetic elements are described in RP.Cowburn, Journal of Physics D, 33, R1 (2000). The present invention may rely upon their singular effectiveness in creating a random signature for anti-forgery.

The magnetic elements are such that when a time-varying magnetic field is applied to the elements, their magnetic response is a non-linear and hysteretic function of that applied field. This non-linearity may be characterised by discrete jumps in the magnetisation at certain applied field values. The elements are such that the small differences in fabrication which must naturally exist from one element to another will cause the magnetic response to vary slightly from element to element. Furthermore, for various embodiments, the elements are such that a given element responds in as similar a way as possible to each cycle of the time-varying applied magnetic field.

In order to determine the baseline signature response of a collection of magnetic elements, a time-varying magnetic field is applied to the elements, and the magnetic response of the elements is recorded. The response can be measured using the device described herein, or by some other means.

The baseline response may be condensed by identifying specific features, such as sudden jumps, or the mean and standard deviation of the switching fields. Alternatively, the baseline response may be converted from a time-domain sequence of magnetisation measurements to a frequency-domain list of measurements. Alternatively, the baseline response may be unprocessed.

Measuring the predetermined baseline response is analogous to a calibration procedure. It is anticipated that the predetermined baseline response will only be measured once, at the time of manufacture and that the device will then be supplied to the user with the predetermined baseline response stored in a manner accessible to the user, for example remotely from the device, or in association with the device in a form inaccessible without authorisation. In particular, it is desirable that the predetermined baseline response is securely encrypted, especially if held on or with the device. Preferably the predetermined baseline signature response is encrypted using an asymmetric encryption algorithm with the private key used for enciphering being kept secret and the public key used for deciphering being made available to any reader of the device such that the expected predetermined baseline signature response can be decrypted and comparison can be made with a measured response.

In order to test the authenticity of an item protected by a random signature, it is necessary in various embodiments to apply a time-varying magnetic field to the magnetic elements and to record the measured magnetic signature response of the elements to that applied field. The same procedure is used first to determine the predetermined, expected baseline response which is then stored as above, and then by use of a suitable reader to obtain subsequently measured baseline responses which can be compared to the predetermined, expected baseline response to authenticate the device.

Authentication relies on the inherently random nature of the device. Artificially fabricated magnetic elements make a very good practical random signature because the magnetic switching field of each element depends critically upon the physical structure of the ends of the elements. Structural variations of only a few nanometres in size can cause significant changes to the switching field (K. J. Kirk, J. N. Chapman, and C. D. W. Wilkinson, J. Appl. Phys. 85, 5237 (1999)). Therefore, in order to replicate the random signature, it is necessary to replicate the precise shape of the elements to near-atomic precision. This is unfeasible using current technology and is likely to remain so for many decades. While near-atomic level manipulation is required to copy the device described in this invention, a macroscopic measurement is sufficient to check authenticity, because when the structure undergoes magnetic switching, the entire structure switches together, making the magnetic response very easy to measure. Thus, the random signature according to this invention requires low-cost, simple processes to interrogate it, but unfeasibly difficult engineering to copy it. This is ideal for a practical random signature.

If the magnetic response of a collection of elements is recorded together as an ensemble measurement, it must be appreciated that the statistical fluctuations upon which this invention is based will be attenuated. The attenuation factor will be $1/\sqrt{N}$, where $N$ is the number of nominally identical elements in the ensemble. Thus, if a collection of individual elements has a switching field with a standard deviation of 10 Oe, then a collection of ensembles of 100 elements will only have a standard deviation of 1 Oe. The measurement of the magnetic response must therefore be made more carefully. On the other hand, the total volume of magnetic material has increased by a factor N, which makes the measurement easier to make.

In various embodiments, authentication relies upon a match between the measured baseline response of the device, and a predetermined baseline response stored securely, in particular in encrypted form. A forger attempting to forge a device incorporating a prerecorded baseline response in an encrypted form will be extremely unlikely to produce a perfect forgery having a measurable magnetic signature response matching an encrypted prerecorded original. In the genuine device, the predetermined baseline response is recorded in an encryption known only to the manufacturing company or those authorised thereby. If the prospective forger merely attempts to copy both the signature device and the encrypt derived therefrom the forgery will fail, because even if the encrypt is copied exactly the magnetic signature response of the copied device will differ from the original. Thus, on the forgery, the measured and predetermined and recorded signature responses will not match. If the forger creates a copy of the signature device, he could instead measure the baseline response of the forged device readily. However, he could not create a suitable valid encrypt corresponding to the forged baseline response because he does not know the encryption. Thus, both possible copying strategies fail.

Thus, in accordance with various aspects of the invention, a practical method of generating and reading a random signature using artificially structured magnetic materials is described which is for practical purposes nearly impossible to copy, and which thus offers a security device which can authenticate originals and prevent counterfeiting by copying of such originals.

The magnetic elements of various embodiments comprise thin layers of magnetic material, preferably less than 1 $\mu$m thick, and more preferably less than 100 nm thick. They may be 10 nm thick or less, but by preference will be generally around 40 nm thick.

The elements may all be nominally identical in shape and of regularly distributed arrangement, or differences between them and/or irregular patterns of arrangement may have been intentionally introduced. It should be emphasised that the random nature of the magnetic response is an inherent consequence of material fabrication, not dependent upon the shape, configuration and distribution pattern of the elements.

The elements may be generally rectangular in shape, in particular elongate rectangular for example comprising an array of generally parallel magnetic elongate rectangular elements, or may comprise areas of magnetic material, for example being square or circular, or some other regular geometric shape, which may for example be formed into a two dimensional array.

As used herein reference made to magnetic wires, microwires or nanowires should be construed as being to such elements of elongated form, and in particular elongate rectangular elements and/or elongate elements in a generally parallel array, but not restricted to the parallel rectangular examples given herein for illustration purposes. As used herein reference made to magnetic dots, microdots or nanodots should be construed as being to such elements comprising areas of magnetic material of less elongate, more squat form, and in particular of regular geometric shape, and/or formed into a two dimensional array, but not restricted to the circular geometry of the examples given herein for illustration purposes.

The elements may be discrete, with no magnetic material connecting them, or they may be partially connected by magnetic material into a number of networks, or they may be entirely connected by magnetic material into a single network.

The elements may be made from a magnetic material, which will by preference be magnetically soft, for example based on nickel, iron, cobalt and alloys thereof with each other or silicon, such as nickel iron alloy, cobalt iron alloy, iron silicon alloy or cobalt silicon alloy.

The elements may be coated with a protective overlayer to prevent oxidation or mechanical damage, said protective over layer comprising a thin layer of non-magnetic material having suitable mechanical and/or environmentally-resistant properties and/or surface treatments and/or coatings, for example comprising a layer of ceramic, glass or plastics material. Such overlayers are conveniently transparent. Particular examples of protective overlayers include titanium dioxide, transparent epoxy resin, plastic or glass, transparent modified silicone resin conformal coating and transparent acrylic conformal coating.

The elements are laid down upon a suitable substrate. An underlayer may exist between the elements and the substrate. The device may be incorporated directly into or upon the item which is to be protected, in which case the substrate may be the item which is to be protected against forgery itself or some suitable substrate material laid down thereupon or incorporated therein for the purpose. Alternatively, the device may be incorporated into a separate unit such as a tag, label, certification etc, attachable to or otherwise useable in conjunction with an item to be protected, the attachable unit comprising or incorporating some suitable substrate material. Suitable substrate materials include silicon, glass, plastic or some other material with a smooth surface.

In the case of the magnetic elements being formed on an attachable unit, the attachable unit may be attached directly to the item to be protected, or may form part of a certificate or other documentation associated with the item to be protected. Means may be provided in association with an attachable unit to effect attachment between the unit comprising an identification device in accordance with the invention and the item to be protected. Such means may provide for releasable, removable engagement of the attachable unit to the protected item, or for permanent engagement thereupon. In the former case, attachment means may further comprise locking means to ensure that only authorised persons can remove the unit. In either case, the attachment means may further comprise anti-tamper protection and/or mechanisms to indicate tampering by unauthorised persons.

Suitable uses for such attachable unit include, without limitation, labels for items of value, of security importance, or of otherwise critical importance, for example to enable identification of the article, authentication of the article as genuine, verification of the provenance of the article and the like and/or to label the article in a secure and controlled manner, for example with information about the article, pricing information, stock control information etc.

In the case of magnetic elements being formed directly upon an item to be protected, similar usages might also be envisaged. Such direct incorporation of the device onto the item to be protected however will be singularly effective in preventing unauthorised reproduction, given the random and hence inherently non-controllably reproducible nature of the signature device, and will therefore be particularly useful in association with items which might be susceptible to the production of counterfeit copies, since the device will provide for ready authentication of an item as original.

The elements may be formed by optical lithography, for example, using the method described herein, although embossing or some other form of contact printing may be used.

The plurality of elements making up the device may be of generally the same size and shape, or may have a size and/or shape differing continuously or discontinuously across the device. Preferably, a number of different element sizes will be present in one ensemble.

In one embodiment, several discrete groups of differently sized and/or shaped elements, the elements being generally similarly sized or shaped within each group, are provided so that several different switching fields can be identified. For example, an ensemble of rectangular elements in parallel array may comprise several discrete groups of different widths.

A suitable example comprises 100 rectangular elements, each 1 mm long; 10 will be 5.0 $\mu$m in width, 20 will be 2.5 $\mu$m in width, 30 will be 1.7 $\mu$m in width, 40 will be 1.2 $\mu$m in width. The magnetic response of such an ensemble will then show four distinct groups of switching fields, each of which will exhibit a statistical variation from one tag to the next, which can be used to form a random signature.

A second example comprises 450 rectangular elements, each 1 mm long; 150 will be 1.0 $\mu$m in width, 120 will be 1.25 $\mu$m in width, 90 will be 1.67 $\mu$m in width, 60 will be 2.5 $\mu$m in width and 30 will be 5 $\mu$m in width. The magnetic response of such an ensemble will then show five distinct groups of switching fields.

In the examples, the number of elements in each group is such that each group should cover generally the same area. The strength of the detected signal from the reader usually depends upon the total area of coverage, so each of the four or five groups of switching fields will register the same strength at the reader. This is a preferred feature for many applications, but it can be envisaged that for other applications several discrete groups of differently sized and/or shaped elements may be provided wherein different groups occupy different areas of the device.

In an alternative embodiment, differently sized and/or shaped elements are provided in a continuously varying array, so that variations in size and/or shape between an element and its neighbours are minimised to avoid large discontinuities. For example the area of an element should vary from its neighbours by no more than 5% and in particular by about 1%. As a result, a smoothly varying collection of switching fields is produced. The variation could be tuned in accordance with a suitable functional form which may be linear or non-linear.

For example, in an analogous device to that described above with rectangular elements in parallel array the width of the elements varies as a smooth function across the array. An ensemble might start with a 2.5$\mu$m wide wire; the next would be 2.53 $\mu$m, the next 2.56 $\mu$m etc, until 56 wires later the width has risen to 5 $\mu$m. The total wire width is 200 $\mu$m in this example. An alternative ensemble might start with a1 $\mu$m wide wire; the next would be 1.01 $\mu$m, the next 1.02 $\mu$m etc, until 450 wires later the width has risen to 5 $\mu$m. Different functional forms, e.g. linear, quadratic etc could be used to determine the progression of widths across the ensemble. Unlike the previous example, this would not give distinct groups of switching fields, but rather a smooth collection of switching fields.

In one embodiment, the device, in addition to the signature array comprising a large plurality of signature elements, comprises a single relatively large area magnetic element for use as a reference element, for example a relatively wide magnetic nanowire or wide microwire. In the foregoing examples such a single wide wire could be 1 mm long and 150 $\mu$m wide. For a wire at such a large width, the magnetic property is almost identical to the bulk material, which is usually quite well defined. Thus, in addition to five blocks which have erratic switching fields there is provided one well defined switching field, which can be used to calibrate the reader. This calibration could include making environmentally-based adjustments, such as subtracting the influence of the Earth's magnetic field, for example, or compensating for changes in temperature.

It is necessary that a predetermined base line magnetic signature response is provided in combination with a security device in accordance with various of the embodiments of the invention. It will however be understood that it is not necessary that such a predetermined base line magnetic signature response is provided in physical association with the security device, but merely that it is available to the authorised user of the device for comparison purposes to give an "expected" response to be compared with an actual response when the device is read by suitable means, such as the magnetic signature reading means described herein.

Various embodiments may be provided. In a first, the pre-recorded baseline may be provided in physical association with the device or protected item. In a second, the pre-recorded baseline may be stored by a device reader. In a third, the pre-recorded baseline may be remotely stored from both device and device reader in a manner accessible to an authorised person such that the necessary comparison between expected (i.e. pre-recorded) and actual (measured) baseline readings can be made for authentication purposes.

In the first embodiment mentioned above, the pre-recorded baseline response is provided in close physical association with the device or protected item. In one alternative, the pre-recorded baseline is stored in physical proximity to the device in machine-readable form. For example, the pre-recorded baseline is stored as a part of the device; or is stored adjacent to or under the device on a common substrate; or is stored in the vicinity of the device as part of a unit incorporating the security device of the invention, optionally with other security or information features, such as a smart card, identification document, key card, key fob or the like, or a label for an article to be protected; or is stored on or with an article to be protected which article to be protected has also been provided with a device in accordance with the invention; or is stored as part of a certificate or other documentation associated with an item to be protected which certificate or other documentation may also incorporate such a device in accordance with various embodiments of the invention.

In this embodiment, the prerecorded baseline should be stored in readable but encrypted form. For example, the condensed or unprocessed baseline response is digitally signed using an asymmetric encryption algorithm such as RSA. The private key, which is used for enciphering, is known only to the manufacturing company; the public key, which is used for deciphering, is held on every reader terminal which might be used to read the device.

The digitally signed and encrypted baseline response is stored on the item, preferably with the magnetic elements for example in that it is printed underneath or alongside the elements, or alternatively by recording it onto a magnetic data strip, or by recording it onto an optical bar code or by recording it onto a smart card chip, or by some other means. Other information, such as, but not limited to, the owner's name or a unique identity code or a checksum may also be encrypted into the same data stream and digital signature to prevent the magnetic elements from being transferred to another item or important information on a document or certificate from being modified.

In the second embodiment referred to above, the prerecorded/premeasured base line response is stored on, by or in close association with a device reader. Such an embodiment lends itself in particular to "lock and key" type systems where the device acts as a key and is used in association with a reader acting as a lock to limit access to particular areas, operation of particular items, or use of particular services to the specified key holder(s).

In this embodiment, it is not necessary for pre-recorded baseline signature data to be stored upon or in close association with the device itself or a protected item. Optionally however, the data may still be stored in an encrypted form for security, for example in the manner above described, or may be otherwise security protected.

In the third embodiment referred to above, the prerecorded/premeasured baseline signature data is stored remotely from both the device and protected item and the device reader. Such a mode of operation lends itself in particular to, but is not limited to, systems where a network comprising a large number of readers each expecting to interrogate a large number of devices is envisaged, for example as might be the case with credit cards and the like with multiple points of sale, security and identification systems with multiple points of access etc.

In accordance with this embodiment prerecorded signature data about the device, and in particular about a plurality of different devices, is preferably stored at a central data store, for example connected to a plurality of readers on a distributed network. In such a network two alternative modes of operation can be envisaged. In the first, a reader is adapted to read a device, interrogate a central data store for the prerecorded signature data, and make the comparison. In a second, the device reader is adapted to read the device and pass the actual signature data to such a central data store for verification purposes. The essential principles remain the same.

In a further aspect of the invention there is provided a security system including at least one device as hereinbefore described and at least one device reader, said device reader comprising means to read the magnetic response of the device. In particular, the device reader comprises or is provided in association with a magnetic field generator to apply a time-varying magnetic field to the elements, and has a magnetic response recorder to record the response of the magnetic element to that applied magnetic field. An embodiment of a device reader is described herein.

For different applications, suitable systems may comprise a plurality of such readers and/or a plurality of such devices. A system comprising a plurality of such readers may be arranged such that each reader functions independently in isolation, or such that some or all of the readers are linked on a distributed network.

Readers provided for a system operated in accordance with the first mode of operation outlined above preferably further comprise means to read the pre-recorded predetermined baseline signature response, in particular the pre-recorded and encrypted signature response, stored on, with or in association with a device or protected article; and preferably further comprise comparator means to compare the prerecorded and measured baseline signature responses. Readers adapted for a system for use in accordance with the second mode of operation described above preferably further comprise storage means for storing the predetermined baseline signature response(s) of the device(s) intended for use therewith, and preferably further comprise comparator means to make a comparison between stored and measured baseline responses. Readers intended for use in accordance with the third mode of operation described above preferably comprise means to receive data concerning a remotely stored predetermined baseline signature response, for example via direct entry of data by a user, or via interrogation of a remote database on a distributed network, together with comparator means to compare the predetermined response to the measured response; or in one alternative, means to transmit the measured response to a remote comparator, which comparator incorporates or is in data communication with a store of predetermined responses.

In all cases, the device reader preferably makes a comparison between the measured and predetermined baseline magnetic signature responses, for example against a predetermined tolerance limit, and actuates a response mechanism depending upon whether signatures are identical, for example within those tolerance limits.

The response mechanism may comprise a simple display means, of any suitable form, including visual, audio, alphanumeric indicators and the like, of whether the device is authenticated. Additionally or alternatively, other responses may be provided for. For example, authentication might serve to release a real or virtual lock, permitting access to a restricted area, operation of an item of restricted equipment, access to a particular service or the like.

According to a further aspect of the invention, a simple device is described which can measure the magnetic response of a small area of thin-film magnetic material. The device is well suited, but not limited, to measuring the magnetic random signature of a device such as described above. The small area will by preference be of size 0.2 mm x 0.2 mm or greater; the magnetic material will be in the thickness range 1 nm to 500 nm, and by preference will be in the range 1 nm to 50 nm. The magnetic material may be a continuous film or may be a collection of magnetic elements. The magnetic material may have a transparent protective overlayer. In various embodiments the magnetic material remains optically reflective.

In various embodiments according to this aspect of the invention a device for measurement of the magnetic response of such an area of magnetic material as a time-varying magnetic field is applied to the magnetic material comprises an illumination source, and in particular an infra-red illumination source; a collimator to focus the illumination onto the surface of the magnetic material; and a collector to collect reflected illumination, and to monitor the varying response of this reflection over time as the time-varying magnetic field is applied. Optionally, the device incorporates or is provided with a magnetic field generator to generate such a field.

In various embodiments, the transverse magneto-optical Kerr effect is used to measure the magnetic response of the area of magnetic material as a time-varying magnetic field is applied to the magnetic material. This effect is well known in the literature. The response measuring device may incorporate additional means to apply such a time varying magnetic field to the area of magnetic material under investigation, or a separate device may be used to apply the same.

In various embodiments the device operates without polarised light. Conventionally, the transverse Kerr effect requires the incoming light to be plane polarised. This is usually achieved by inserting a sheet of Polaroid or some other polarising optical element in the incoming beam path. It has been surprisingly found that in application to this invention, the polariser can be removed to reduce manufacturing cost and to reduce the size of the device. In the preferred embodiment of the present device a polariser is absent. This is suitable for many applications. Nevertheless it will be understood that a polariser may be included, for example in the in-coming beam path in conventional manner, where this is desirable or necessary.

Preferably, the collimator comprises a pinhole. At the scale of device operation this is found to effectively focus the light without the need to use a lens. This again reduces manufacturing cost and reduces the size of the device. Conveniently, the pinhole has diameter in the size range 0.2 mm - 5 mm.

The light is then reflected off the surface of the magnetic thin film. Preferably, a second pin-hole, with diameter in the size range 0.2 mm - 5 mm, is provided to focus the reflected light. It is preferred that the second pin-hole should have the same diameter as the first pin-hole. Light is passed to a collector comprising a light sensitive device, which is by preference a phototransistor or photodiode sensitive to the radiation produced by the light source.

In various embodiments, the light source comprises a light emitting diode. This is in contrast to prior art large scale devices for measuring the magneto-optical Kerr effect where a laser or a discharge lamp or an incandescent lamp is used. The present device is smaller, cheaper and removes the hazards associated with a product containing a laser.

An infra-red light emitting diode (LED) is preferred over a visible spectrum LED for two reasons: high optical intensities are achievable in the infra-red due to the higher currents that infra-red LEDs can sustain; the optical receiver can be rendered insensitive to visible light, thus reducing interference from ambient light.

In various embodiments, the light source comprises a laser diode. Laser diodes are relatively inexpensive and can provide high intensity light.

In a further aspect of the invention, a method of manufacture of a security device comprises forming at least one, and preferably a large plurality of, magnetic elements as above described; obtaining a baseline signature magnetic response for the elements; storing the baseline response as a predetermined baseline response in a form accessible to a user of the device, optionally by encrypting and storing in physical association with the device in any readable form.

In various embodiments the elements will be formed by optical lithography.

In various implementations according to this aspect of the invention, a cost saving can be made in the lithography process in the case of the magnetic elements comprising an array of generally rectangular structures. The photoresist is applied to the substrate in the usual fashion and patterned by an optical exposure followed by development. The magnetic material is then deposited onto the patterned photoresist. Usually, the photoresist would then be dissolved in a solvent (lift-off process). However, the photoresist can be left in place, because the magnetic material deposited on top of it forms a second set of rectangular magnetic elements. For example, suppose that the resist had been patterned into rectangular structures of width 0.5 $\mu$m with a centre-to-centre spacing of 1.5 $\mu$m. If the photoresist is left in place, then the structures comprise a set of 0.5 $\mu$m wires attached to the substrate, and an equal number (minus 1) of 1 $\mu$m wires attached to the top of the substrate.

The invention in a further aspect comprises a method of marking an item for security, identification or authentication purposes by use of the foregoing device and/or system and/or method and in particular by associating a device as hereinbefore described therewith.

The invention in a further aspect comprises a method of identifying or authenticating an item by use of the foregoing device and/or system and/or method and in particular by associating a device as hereinbefore described therewith, applying a time-varying magnetic field to the elements thereof to obtain a measured baseline magnetic signature response, for example using the reader hereinbefore described, and comparing the measured response to a predetermined recorded baseline magnetic signature response.

Embodiments of the invention will now be described, by way of example only, with reference to the appended figures in which:

Figures 1 to 4 show embodiments of security devices according to the present invention in perspective view;

Figure 5 shows a further embodiment of a security device according to the present invention in plan view;

Figure 5a shows a another embodiment of a security device according to the present invention in plan view;

Figure 6 shows another embodiment of a security device according to the present invention shown in cross-sectional view;

Figures 7a to 7d illustrate magnetic switching modes of magnetic elements that may be used in various embodiments of the present invention;

Figures 8a and 8b show idealised, schematic real and averaged hysteresis curves for the magnetic switching of a permalloy material that may be used in various embodiments of the present invention;

Figures 9a to 9h illustrate a manufacturing technique for producing various embodiments of security devices according to the present invention;

Figure 10 shows a reading arrangement forming a part of a security reading device system according to various embodiments of the invention;

Figure 11 shows a mirror actuator for use in a security device reading system according to various embodiments of the invention;

Figure 12 shows a further part forming a part of a security device reading system according to various embodiments of the invention;

Figure 13 shows a signal that drives a magnetic field generator according to various embodiments of the invention;

Figure 14 shows a signal that drives the mirror actuator according to various embodiments of the invention;

Figure 15 shows one cycle of the signal of Figure 13;

Figure 16 shows a unipolar detector signal representing a characteristic response according to various embodiments of the invention;

Figure 17 shows a synchronisation signal for synchronising various security device reading systems according to various embodiments of the invention;
Figure 18 is an illustration of a first collection of magnetic elements used for a random magnetic signature/characteristic response in accordance with the invention;
Figure 19 is an illustration of a second collection of magnetic elements;
Figure 20 is an illustration of a third collection of magnetic elements;
Figure 21 is an illustration of a device for measuring the magnetic response of a small area of thin magnetic film;
Figure 22 is an illustration of an embodiment of the invention in a smart card;
Figure 23 is an illustration of an embodiment of the invention in an electronic key;
Figure 24 is an illustration of an embodiment of the invention in an identity tag for attachment to an item to be protected;
Figure 25 is an illustration of an embodiment of the invention incorporated into a CD/DVD for authentication purposes; and
Figure 26 is an illustration of an embodiment of the invention incorporated onto a certificate for authentication purposes.

In various embodiments, magnetic materials are used to form magnetic elements responsive to an applied magnetic field. The characteristic response of these magnetic elements to the applied magnetic field gives rise to a measurable characteristic response or signature for identifying a security device including a set of such magnetic elements.

Many types of magnetic material are available that could be used to form magnetic elements in various two-dimensional and three-dimensional shapes: for example, magnetic wires, flattened wires, bars, dots, random spots, random blobs etc. While many such materials can be used in embodiments of the invention, certain materials give a better magnetic response than others when subject to an applied magnetic field; particularly if the magnetic switching properties of the material are to be used as the, or as part of the, measurable characteristic response.

Where embodiments of the invention use the magnetic switching properties of the material to produce a characteristic response, magnetically soft materials are useful. Magnetically soft materials are ferromagnetic materials in which the magnetisation can be easily reversed. These materials generally have narrow square-shaped hysteresis loops. Thus, the magnetisation of a magnetic element made from such a material switches its direction in response to an applied field relatively sharply. The coercivity of such materials (i.e. the reverse field needed to drive the magnetisation of a magnetic element made of such a material to zero after being saturated) tends to be relatively low, thereby ensuring that relatively low-field-strength magnets can be used to cause a switch in the magnetisation direction of the magnetic element. Such, relatively low field-strength magnets may be fairly inexpensive, generally compact and easily driven to produce a controlled magnetic field of good uniformity.

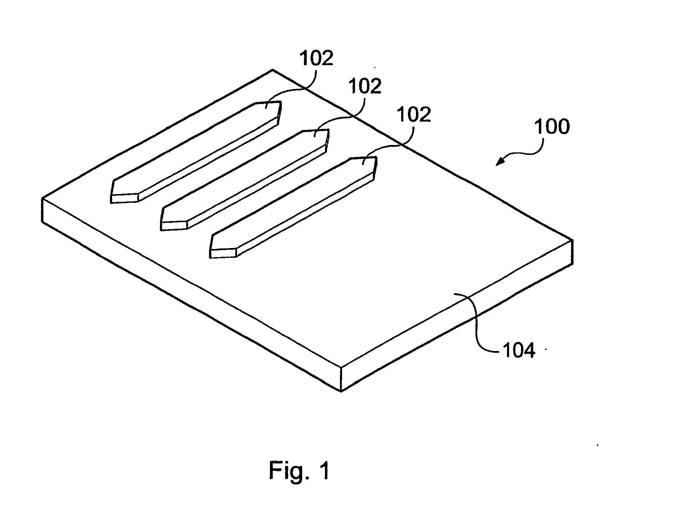

Figure 1 shows a security device 100. The security device 100 comprises a plurality of magnetic elements 102 formed upon a silicon substrate 104. The magnetic elements 102 are made of permalloy material.

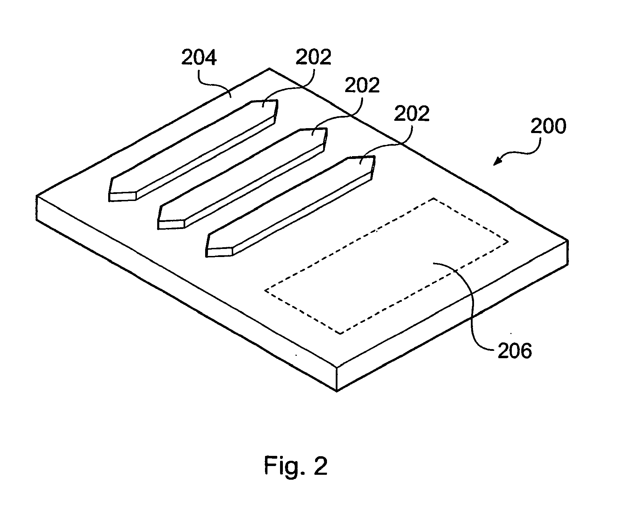

Figure 2 shows a security device 200. The security device 200 comprises a plurality of magnetic elements 202 formed upon a silicon substrate 204. The magnetic elements 202 are made of permalloy material. Data area 206 is provided in the substrate 204 for storing encrypted premeasured characteristic response information and/or a unique identifier for identifying the security device 200.

The data area 206 of this embodiment comprises a set of etched pits (not shown) encoding binary data corresponding to encrypted premeasured characteristic response information and/or a unique identifier that can be read, for example, by an optical reader (not shown) in a manner analogous to a compact disc.

In further variants of this embodiment, the data area 206 may alternatively, or additionally, comprise electronic circuitry (not shown) that retains characteristic response and/or a unique identifier information.

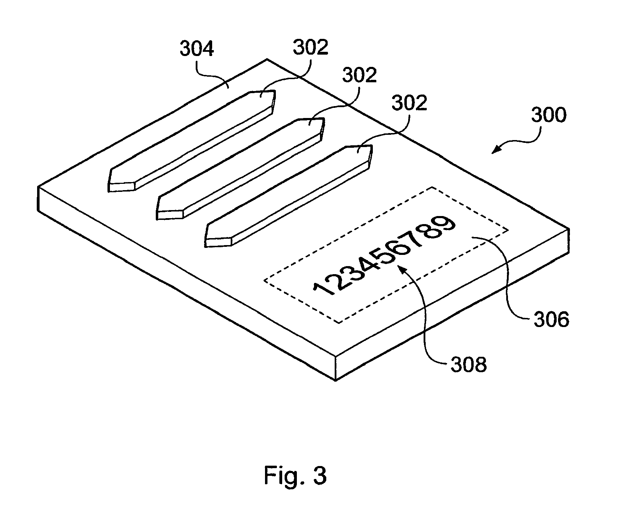

Figure 3 shows a security device 300. The security device 300 comprises a plurality of magnetic elements 302 formed upon a silicon substrate 304. The magnetic elements 302 are made of permalloy material. Data area 306 is provided in the substrate 304 for storing encrypted premeasured characteristic response information and/or a unique identifier for identifying the security device 300.

In the data area 306 of this embodiment indicia 308 are provided. The indicia 308 encode data corresponding to encrypted premeasured characteristic response information and/or a unique identifier that can be read by a reader (not shown). In one variant of this embodiment, visible indicia 308 are provided by a machine readable bar code (not shown) that encodes both encrypted premeasured characteristic response and unique identifier information. In another variant of this embodiment, visible indicia 308 are provided by a machine readable bar code (not shown) that encodes only unique identifier information.

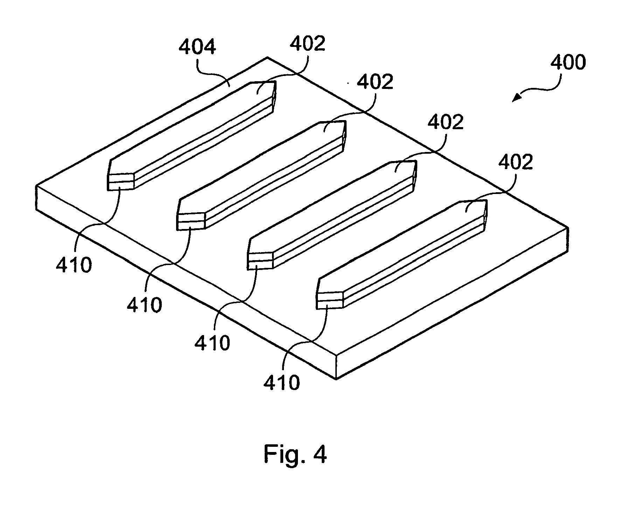

Figure 4 shows a security device 400. The security device 400 comprises a plurality of magnetic elements 402 formed upon a silicon substrate 404. The magnetic elements 402 are made of permalloy material. Each magnetic element 402 is backed by a reflective layer 410 made from gold, aluminium, chromium and/or tantalum, for example. The reflective layers 410 provide enhanced reflectivity contrast between the magnetic elements 402 and the substrate 404. This embodiment thus provides for an improved signal to noise ratio (SNR) when the security device 400 is being interrogated by a reading apparatus, such as, for example, a reading apparatus of the type described herein. An advantage of increased SNR is that it enables such a security device 400 to be rapidly interrogated to determine whether or not it is a forgery, and/or needs lower levels of incident light (e.g. ultraviolet to infrared, such as, for example, from 200nm to 1500nm) in order to be interrogated.

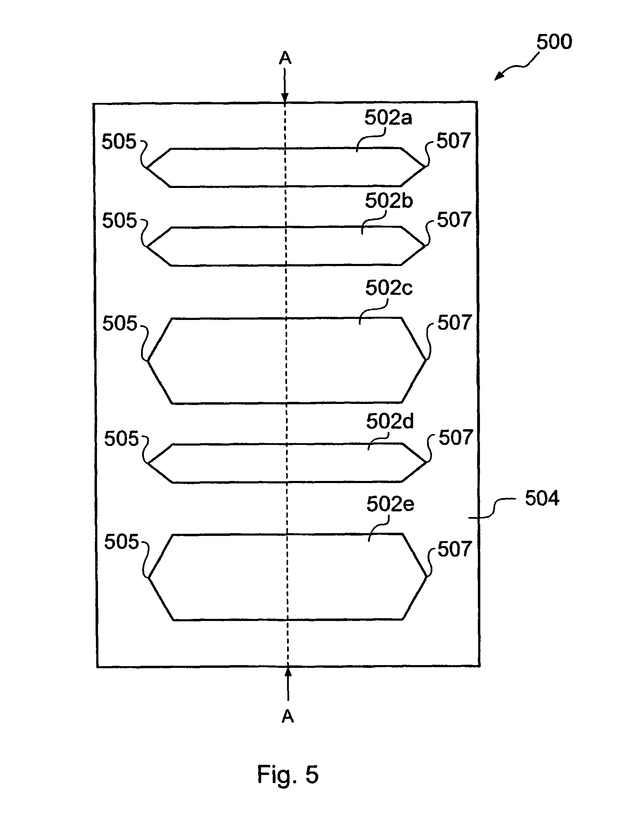

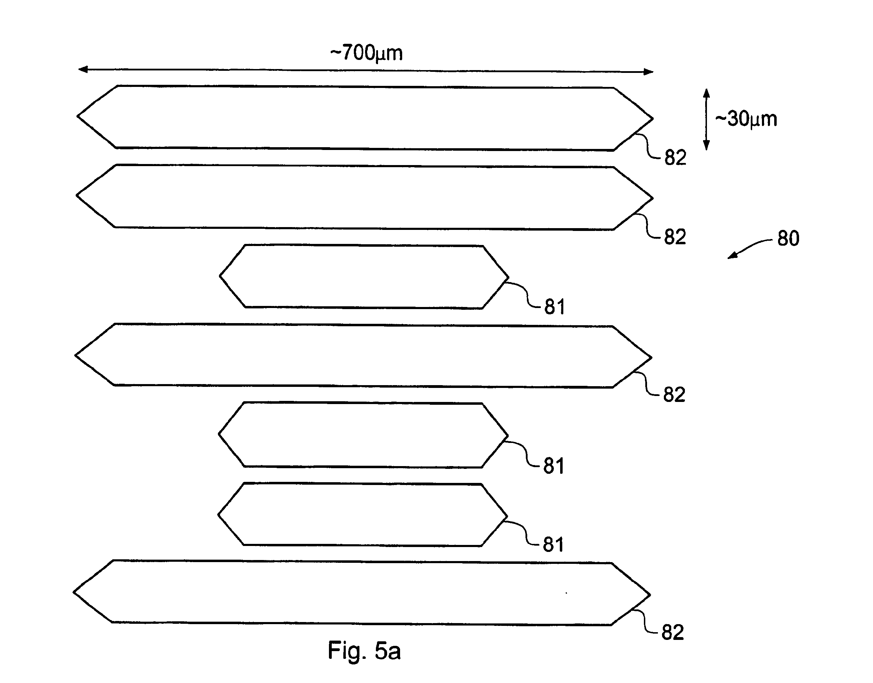

Figure 5 shows a further embodiment of a security device 500 in plan view. The security device 500 comprises a plurality of magnetic elements 502a-502e formed upon a silicon substrate 504. The magnetic elements 502a-502e are made of permalloy material formed in the shape of wires, or flattened wires. The magnetic elements ends 505, 507 are formed as angled shapes.

In this embodiment, the width of the magnetic elements 502a-502e in the direction A-A can be made of various widths. In this case, the width of the magnetic elements 502c and 502e are approximately double those of magnetic elements 502a, 502b and 502d. Since the magnitude of the characteristic response signal produced by any particular element is proportional to the volume of material that makes up that element, larger elements give rise to a larger signal that is accordingly more easily measured.

In addition, the magnetic elements 502a-502e can themselves be used to encode an identifier. In the illustrated embodiment, the five magnetic elements 502a-502e occupy an area of approximately 1x1 mm with space enough for some seven to twelve magnetic elements of the 40 $\mu$m width and 900 $\mu$m length of magnetic elements 502a, 502b and 502d. The pattern of the five magnetic elements 502a-502e is used to provide an identifier for the security device 500. This pattern is analogous to a bar code that identifies a particular security device 500, and may be unique to each individual security device 500 that is manufactured.

The number of unique identifiers that can be provided by variants of this embodiment depend upon the number and density of the magnetic elements 502. For example, embodiments having a possible 32 magnetic elements provide for a possible $2^{32}$ (i.e. 4,294,967,296) unique identifiers. Moreover, where the magnetic elements are identifiable using a two-dimensional scanning pattern, e.g. where magnetic elements 502 are provided in an array of 32x32 dots, this figure can be squared.

Figure 5a illustrates another embodiment. Various magnetic elements 81, 82 of different lengths are provided. In this embodiment a characteristic response can still be measured even from what appear as part of an identifier pattern as 'spaces', since the effective bits of an identifier provided by the magnetic elements 81 each still provide a response. Reading is achieved using a laser beam that may only be focused in one dimension, e.g. to 1mm long and 20 microns wide. The reflected intensity, as measured e.g. using the magneto-optic Kerr effect as herein described, therefore changes according to the length of the bar. Typically 30 $\mu$m width bars with longer bars 82 about 700 $\mu$m long and shorter bars 81, for example, some 300 mm long, may be provided.

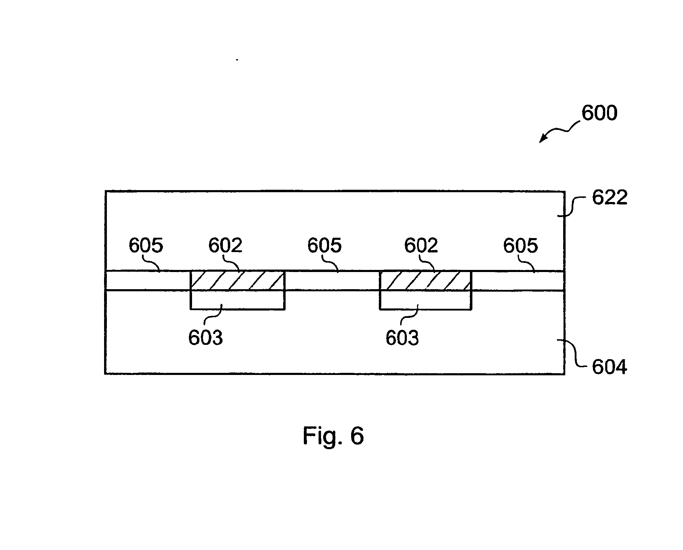

Figure 6 shows an embodiment of a security device 600 in cross-sectional view. Although this embodiment incorporates both reflectivity and contrast enhancing materials, these can be provided separately in various other embodiments.

The security device 600 is formed from a silicon substrate 604. The substrate 604 incorporates reflective layers 603 formed beneath magnetic elements 602 made from, for example, gold, aluminium, chromium and/or tantalum. The reflective layers 603 increase the optical signal (including the Kerr effect signal, as described below) reflected from the magnetic elements 602 as compared to magnetic elements formed directly onto a substrate material.

Adjacent to the magnetic elements 602 absorbing layers 605, made of, for example, carbon, are formed. The absorbing layers 605 have a low reflectivity, and thus enhance the contrast between light reflected therefrom and the adjacent magnetic elements 602.

Another variant of the embodiment shown in Figure 6 uses, for example, a roughened surface formed by deposition or etching, as a scattering material in place of the absorbing layers 605. The effect of the scattering material is to attenuate any optical signal reflected from the areas adjacent the magnetic elements 602, with the additional advantage that the security device 600 need not absorb as much optical energy.

In order to characterise various materials that may have desirable responses to an applied magnetic field, it is useful at this point to describe some of the physics involved in the switching of the magnetisation direction of various types of ferromagnetic materials. Such ferromagnetic materials may be used in various embodiments.

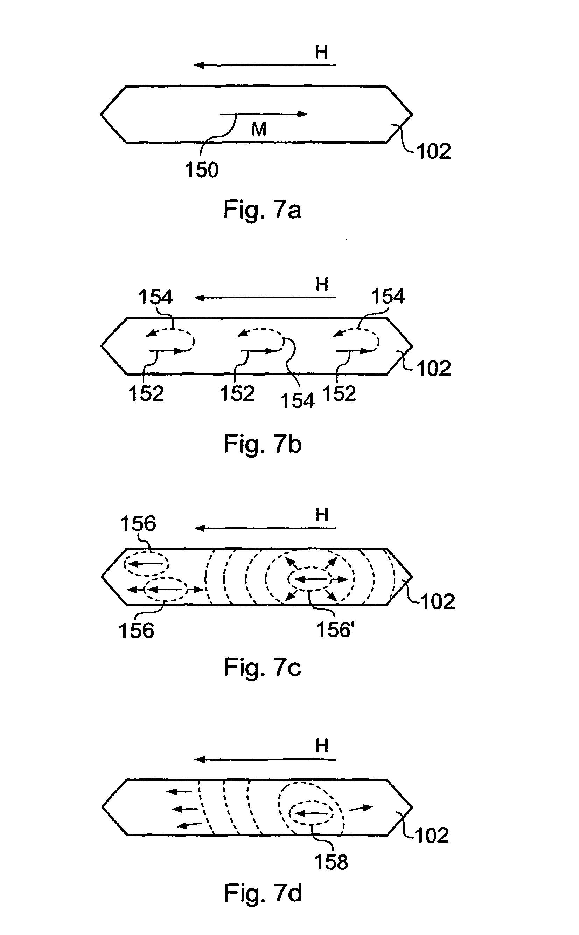

Referring to Figure 7a, a magnetic element 102 is shown. In this example, the magnetic element 102 is formed of a ferromagnetic material shaped in the form of a flattened wire. The magnetic element 102 has a magnetisation M having an initial magnitude and direction as indicated by the arrow 150. An applied magnetic field H is shown being applied to the magnetic element 102 in a direction substantially parallel to a longitudinal axis of the magnetic element 102, and with an opposite polarity to the initial magnetisation.

The applied magnetic field H acts to reverse the polarity of the magnetisation of the magnetic element 102. There are various physical mechanisms by which the magnetisation of the magnetic element 102 can reverse. Each of these leads to a different magnetic switching characteristic of the magnetisation M.

In a first switching mode (sometimes referred to as a coherent rotation mode, shown schematically in Figure 7b) the individual magnetisations of a plurality of magnetic domains 152 rotate coherently, as shown schematically by the broken arrows 154. Thus in this mode, the overall magnetisation of the magnetic element 102 undergoes smooth directional rotation and magnetisation magnitude changes to align with the applied magnetic field H.

In a second switching mode (sometimes referred to as a multiple nucleation mode, shown schematically in Figure 7c) many magnetic domains 156 dominates the switching of the magnetisation of the magnetic element 102 when an applied magnetic field H is present. The magnetisations of the individual domains 156 initially rotate into alignment with the applied magnetic field H, as illustrated in Figure 7c. Subsequently the domains grow in size. However, in this mode the temporal evolution of the magnetisation of the whole of the magnetic element 102 cannot be readily discerned, and may change randomly in response to environmental conditions, such as temperature.

Thus, although materials that operate according to the second switching mode can be used for magnetic elements of various embodiments, they are not optimal since, because there is less variation in the magnetic switching properties to provide a measured characteristic response, it is relatively easy to copy.

In a third switching mode (sometimes referred to as Brown's paradox, a sharp switching or a brittle mode, shown schematically in Figure 7d) the growth of a single magnetic domain 158 dominates the change in magnetisation of the magnetic element 102. Such a domain 158 may be associated with a structural defect in the magnetic element 102 that is randomly introduced during a manufacturing process, e.g. by uncontrollable fabrication noise arising from random nano-scale material defects (e.g. defects that occur on a size scale from about 0.5 nm to about 500 nm) that are virtually impossible to reproduce controllably or predictably. In this mode, the growth of domain 158 dominates the switching of the magnetisation of the magnetic element 102 over a wide variety of physical and environmental conditions. Accordingly, materials that operate according to the third mode are ideally suited to the provision of stable, but non-predetermined, magnetic switching properties that provide a reproducibly measurable characteristic response.

Various possible defects can form a nucleation centre, these can, for example, include one or more of the following: local failures in lithographic definition, e.g. small (micron or sub-micron) notches out of the edges of tips of elements; local crytallographic defects, such as dislocations, inclusions, nanometre-scale voids; local variations in chemical composition or stoichiometry, leading to a local change in magnetic anisotropy; and local short-scale variations in thickness, leading to a surface indentation which can generate Orange Peel fields, as envisaged by Brown.

The reference 'Introduction to the Theory of Ferromagnetism' by Amikam Aharoni (ISBN 0 19 851791 2), pp. 204 - 214, gives a useful overview of many of the aforementioned concepts.

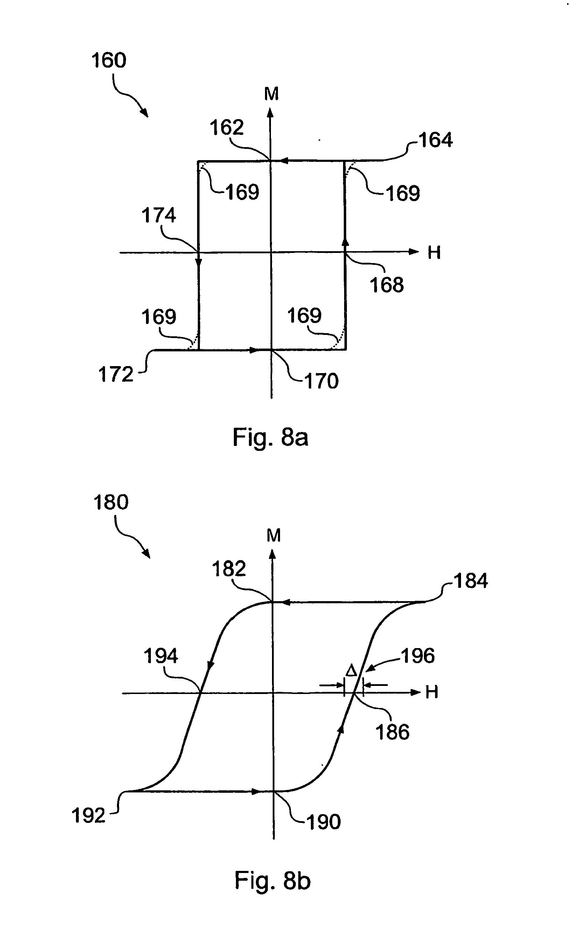

Figure 8a shows an idealised single hysteresis loop 160 indicating how the magnetisation M of a magnetic element 102 made from the permalloy material varies as a function of an applied magnetic field H. Dotted lines 169 indicate how the idealised single hysteresis loop 160 may vary from the ideal for a real magnetic element 102. The magnetic element 102 starts with an initial magnetisation 172. The applied filed H is increased until it reaches a value 170. Thereafter, the applied field H is increased to a switching value 168 where, due to hysteresis, the magnetic element 102 rapidly switches its magnetisation M from the initial magnetisation 172 to a magnetisation 164. Thereafter, the applied field H is decreased to a switching value 174 where, due to hysteresis, the magnetic element 102 rapidly switches its magnetisation M from the magnetisation 164 back to the initial magnetisation 162.

As is observed from Figure 8a, the magnetic switching characteristics of the magnetic element 102 made from permalloy material is seen to operate in the sharp switching mode, even when the real hysteresis loops deviate from the ideal, as the transitions of the magnetisation from one polarity to the other are still sharply defined.

Figure 8b illustrates an averaged hysteresis loop 180 for many (e.g. ~100) cycles of the magnetic element 102 made from the permalloy material around hysteresis loops of Figure 8a. It is observed that the averaged hysteresis loop 180 does not show sharp transitions in the state of magnetisation of the magnetic element 102, even though sharp transitions do occur for each individual magnetic cycle 160. The reason for this is because the switching values 168 and 174 of each individual magnetic cycle 160 vary between cycles which gives rise to jitter.

The magnitude $\Delta$ of the jitter 196, determined as the standard deviation of the differences in switching values 168 for the various magnetic cycles 160, is shown in relation to the averaged hysteresis loop 180. In turn, the jitter magnitude $\Delta$ provides a characteristic response for the magnetic element 102 that generates it. The magnitude of the jitter is dependent on the precise volume and energy of the nucleation centre that is responsible for magnetisation reversal. It therefore varies from one magnetic element to another, since no two nucleating defects are likely to be the same.

Coercivity is also a characteristic measurement that indicates uniquenss. In various embodiments coercivity provides for a better characteristic response than jitter. In such embodiments jitter can be measured as an additional characteristic response parameter. Viewed from one perspective, a distribution function representing the reversal/switching field (of a single magnetic element) as observed across many reversals/switchings has a central value of the distribution corresponding to the coercivity and a width distribution representative of the jitter.

Various embodiments of a security device incorporating magnetic elements can be provided. One process of manufacturing various of such security devices on a silicon substrate using optical lithography will now be described, by way of example.

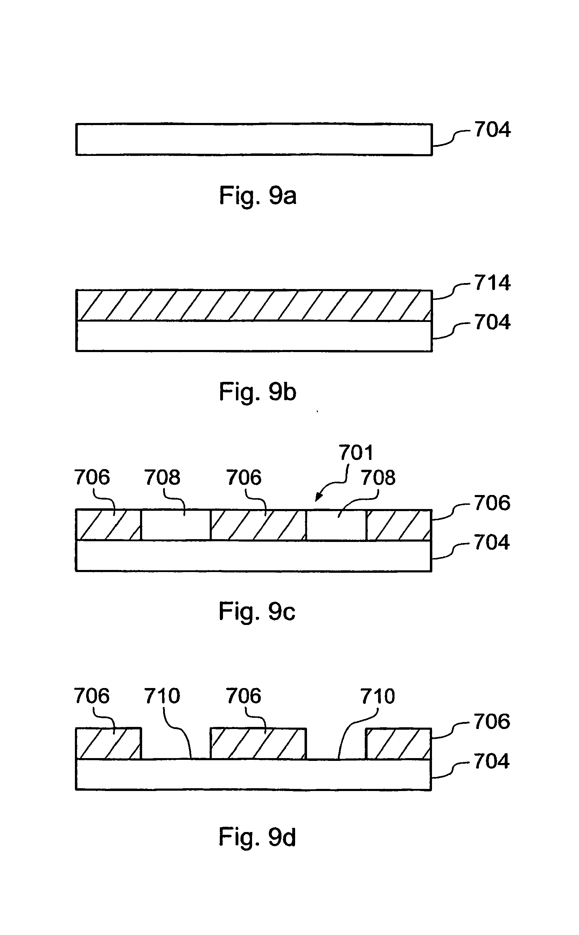

The manufacturing process is illustrated in Figures 9a to 9h. The process starts in Figure 9a with a cleaned and polished silicon wafer 704. In various embodiments, the silicon substrate is approximately 0.5 mm thick in order to facilitate handling and provide a rugged security device. A photoresist layer 714 is spun onto the wafer to provide a smooth coating as shown in Figure 9b. The wafer and photoresist layer 714 are then baked to set the photoresist layer 714.

Figure 9c illustrates the device of Figure 9b post-exposure to UV radiation or near-UV radiation (e.g. at 405 nm). The regions 708 represent exposed regions. The exposed regions 708 are directly written onto the upper surface 701 of the photoresist layer 714 using a commercially available direct write scanning optical lithography system such as, for example, a NanoMOKE2 system with a LaserWriter add-on supplied by Durham Magneto Optics Ltd. In this way, an individual one-dimensional or two-dimensional pattern can be written into the photoresist layer 714 for each security device that is manufactured. This pattern may define a plurality of wire shapes, such as, for example, those illustrated in Figure 1.

Figure 9d shows the device of Figure 9c after is has been developed to remove exposed photoresist 708. Removal of the exposed photoresist 708 exposes portions 710 of the underlying silicon substrate 704.

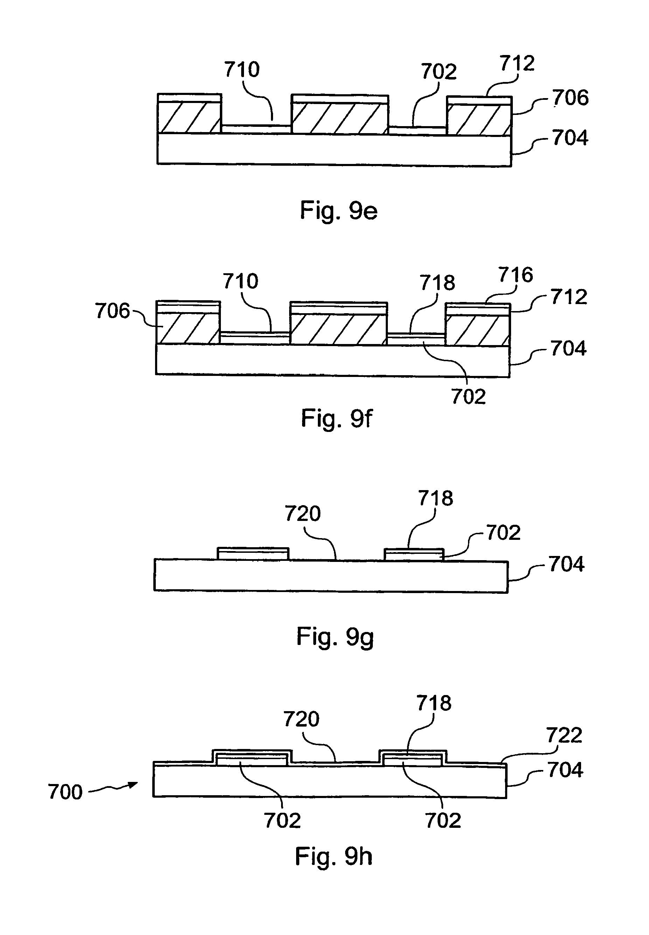

Subsequently, as shown in Figure 9e, magnetic elements 702 formed of a permalloy material such as, for example, $Ni_{80}Fe_{20}$ (see, for example, Bozorth, Ferromagnetism, ISBN 0-7803-1032-2, for further information) are deposited in exposed portions 710 by a sputter deposition or evaporation process, typically to a thickness in the range from about 10 to about 100 nm, e.g. to about 40 nm. Further layers 712 of permalloy material also form on the remaining unexposed photoresist 706 during the sputter deposition process.

Next, metal capping layers 716, 718 of gold or aluminium are formed over the permalloy layers 712 and magnetic elements 702, as illustrated in Figure 9f. The capping layer 718 is designed to protect the permalloy layer from oxidation and also provides an enhanced optical reflectivity.

The unexposed photoresist 706 along with overlying permalloy layers 712 and capping layers 716 are removed using a suitable solvent, e.g. acetone, to leave the structure illustrated in Figure 9g. The resulting structure comprises the magnetic elements 702 formed on the silicon substrate 704 separated by exposed silicon substrate regions 720. The upper surfaces of the magnetic elements 702 are capped by capping layers 718.

The aforementioned resulting structure is placed into a plasma enhanced chemical vapour deposition (PECVD) chamber where a silicon dioxide ($SiO_2$) layer 722 is deposited upon the upper exposed silicon substrate regions 720 and capping layers 718. The silicon dioxide layer 722 forms an optically transparent layer (including, *inter-alia,* a layer that is substantially transparent to infra-red electromagnetic radiation). The resulting security device 700 is shown in Figure 9h.

Where several security devices 700 are manufactured upon a single silicon substrate 704, the silicon substrate 704 can subsequently be diced into a plurality of individual security devices 700.

The applicants have produced several prototype security devices using the process hereinbefore described. During production of these prototype security devices the sputter deposition process parameters used were as follows: 250W power setting; base pressure 5 x $10^{-7}$ mbar; Argon gas; gas pressure 1 to 2 mTorr, flow of 5 cc/minute; substrate rotation rate 10 rpm; deposition rate 1 to 1.5 Angstroms per second; and a substrate temperate of 22 to 27 °C. It is also possible to apply a magnetic field along the plane of the device during the manufacturing process.

The applicants note from an analysis of their prototype security devices, that fine tuning of the growth rate and/or sputter pressure for the magnetic elements can provide improvements to sharp switching mode magnetic switching characteristics. The applicants have also noted from an analysis of their prototype security devices, that magnetically soft materials tend to give rise to desirable magnetic switching properties.

Once a security device had been manufactured it is tested, either alone or as part of a batch of such security devices, to determine its characteristic response. The characteristic response is measured to ensure it provides for adequate identification of the particular security device.

Magnetic elements are first tested to determine whether or not they operate in the sharp switching mode. A Kerr magnetometer, as described in Applied Physics Letters, Vol. 73, p. 3947, 1998, is used to measure the coercivity at a number of points on each individual magnetic element. For example, five points on each element may be used and the coercivity measured at each point. Magnetically sharp switching is deemed to exist if the variation between measured coercivity values from one magnetic element is small compared with the variation between coercivities measured across a number of elements. In practice, magnetically sharp structures switch with less than 0.2 Oe variation across the element, while one element may differ in coercivity from another by approximately 1 - 2 Oe.

A jitter measurement may also be made for each magnetic element, or for a group of such elements, by repeating measurements on that element/group and determining how much the coercivity varies between sets of measurements. These sets of measurements are repeated many times for each magnetic element/group of the security device. In one example, coercivity may be measured at one point on a security device, one hundred times per each magnetic element/group of magnetic elements at room temperature. The measured coercivity values are then fitted to a Gaussian bell-curve, and the mean coercivity and jitter (as indicated by the mean and standard deviation ∆ of the fitted Gaussian curve, respectively) calculated.

The applicants have found that for various embodiments, over a typical likely operating temperature (for example, from -20°C to 50°C where anti-misting measures are provided in a reader), jitter exhibited only a weak temperature dependency.

In various embodiments, there is a measurable dependence of mean coercivity on temperature. However, provided that the mean coercivity of a plurality of magnetic elements varies in the same way with temperature, the coercivity differences between magnetic elements remains almost constant. Thus, when comparing the measured mean coercivity against the premeasured characteristic response, an allowance may be made for a constant offset between the two sets to compensate for different temperatures.

However, if desired or required for various other embodiments, coercivity and jitter measurements may be made at several temperatures, including temperatures outside a normal operating temperature range. For example, sets of measurements could be made on each magnetic element at -50°C, 0°C and 65°C for a security device rated for operation from about -20°C to about 50°C.

In practice, an upper limit on the permitted variation allowed between the measured coercivity values measured for a single magnetic element should be set. This can be an absolute value (e.g. 0.2 Oe) or be determined relative to the jitter magnitude (e.g. 10% of the measured jitter value). Security devices having one or more magnetic elements that gave rise to coercivity variation values greater than the permitted variation should be rejected.

A desirable characteristic is that any variation due to jitter be small in order that the mean coercivity be easier to measure. Mean coercivity can then be used as a parameter for a premeasured characteristic response. Jitter may also be used as parameter for the premeasured characteristic response, e.g. in addition to mean coercivity for respective magnetic elements or groups of such elements.

In various embodiments, security devices may have their premeasured characteristic response defined by a mean coercivity value and/or a jitter value ∆, for various magnetic elements or groups of magnetic elements. Various other embodiments use, for example, either a mean coercivity value or a jitter value to represent a premeasured characteristic response. In use, the premeasured characteristic response of a security device is compared to its measured characteristic response to determine if that security device is a forgery.

The premeasured characteristic response can be encoded, for example, by digitising the values of the mean coercivity and/or the jitter value ∆. In various embodiments, these values are stored in encrypted form upon the corresponding security device, either with or without an identifier that may be unique. In various other embodiments, these values are stored separately from the corresponding security device. In various embodiments, during a reading operation (as described below) the digitised values of mean coercivity and/or jitter value ∆ representing a premeasured characteristic response can be retrieved/recovered for a particular security device and compared to measured values of mean coercivity and/or jitter value ∆ for a security device purporting to be the same device, so as to determine whether or not the security device whose characteristic response has been measured is a forgery.

Security devices may be attached to articles in order to aid in identifying such articles as genuine or non-counterfeit. In use it is necessary to read the characteristic response of a particular security device in order that it may be compared to a premeasured characteristic response, such as for example, a baseline response. Any differences between the measured and premeasured response, outside of any allowable limits, indicate that the security device that has been read is a forgery. Since the production of magnetic nucleation centres is beyond the control of the manufacturer, any copying of the device will almost invariably result in a different characteristic response, such as, for example, mean coercivity and jitter values.

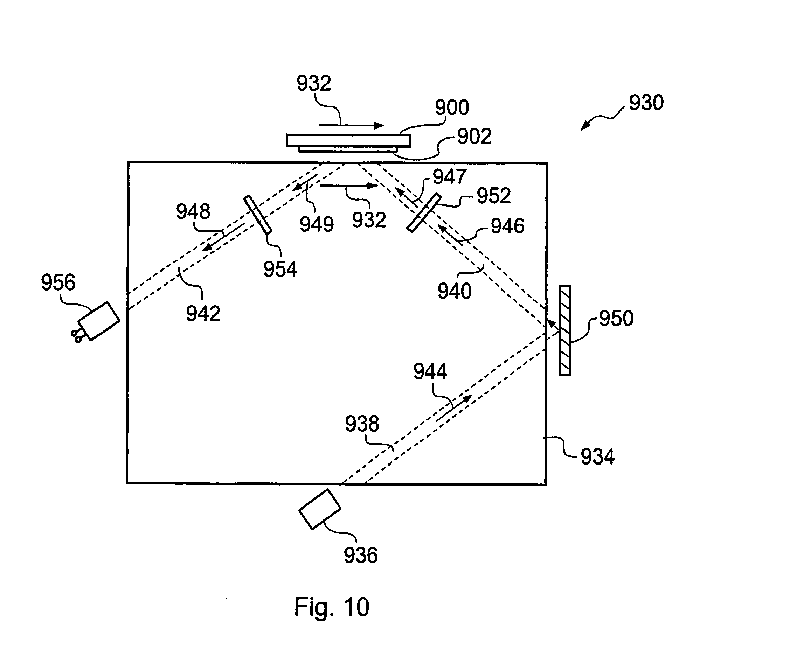

Various embodiments of systems, both handheld or otherwise are envisaged. Various such embodiments are described below in connection with Figures 10 to 17 of the drawings.

Figure 10 shows a reading arrangement 930 forming a component of a security device reading system for obtaining a measured characteristic response of a security device 900 while the security device 900 is subject to an applied magnetic field 932. The reading arrangement 930 can detect changes in the polarisation of light reflected from the magnetic elements using the magneto-optic Kerr effect (MOKE).

The reading arrangement 930 comprises an aluminium block 934 whose internal and external surfaces are blackened using a black matt anti-reflection paint. The size of the an aluminium block 934 is typically 2 cm x 2 cm x 1 cm. The aluminium block 934 comprises beam path channels 938, 940, 942. A near infra-red or visible laser diode 936, which is provided with collimating optics (not shown), is operable to produce a collimated laser beam 944 at a wavelength of, for example, 600 to 1550 nm. One embodiment uses a laser diode operating at 670 nm. The laser beam 944 passes though a first beam path channel 938, before it leaves the aluminium block 934 and is incident upon a mirror 950.

The laser beam 944 is reflected from the mirror 950 into a second beam path channel 940 formed in the aluminium block 934. A polariser 952 placed into the second beam path channel 940 converts the laser beam 944 into a plane polarised laser beam 947. The plane polarised laser beam 947 then leaves the second beam path channel 940.

The aluminium block 934 also comprises a third beam path channel 942. The third beam path channel 942 is oriented so as to collect reflected light 949 that is reflected from a security device 900 when being read. Typically, if a security device 900 has wire-shaped or flattened wire-shaped magnetic elements 902, the applied field 932 is applied in a direction substantially parallel to the axis of the magnetic elements 902.

An analyser 954, used in various embodiments, incorporating an optional quarter wave plate and polariser is placed into the third beam path channel 942. The analyser 954 passes light of a first polarity and blocks light of a second an orthogonal polarity. Light of the first polarity is reflected from a magnetic element 902 when it is in a first saturated magnetisation state, and light of the second polarity is reflected from the magnetic element 902 when it is in a second saturated magnetisation state having a largely reversed polarity or modified intensity with respect to the first magnetisation state.

The polariser 952 and the analyser 954 are arranged to measure the longitudinal magneto-optic Kerr effect signal produced when the plane polarised laser beam 947 is incident upon the magnetic elements 902. Other magneto-optic Kerr effect arrangements, for example, including arrangements without a polariser and/or analyser and/or using a transverse or polar arrangement may also be used. However, a benefit of using a longitudinal magneto-optic Kerr arrangement is that it generally provides an improved signal as compared to transverse or polar arrangements.

Aligned with the third beam path channel 942 is a detector unit 956, which in this embodiment incorporates a focussing lens and a photodiode circuit or phototransistor circuit sensitive to illuminating radiation. The photodiode circuit is responsive to light transmitted through the analyser 954 to provide a signal proportional to the magnetisation of any magnetic elements 902 illuminated by the plane polarised laser beam 947.

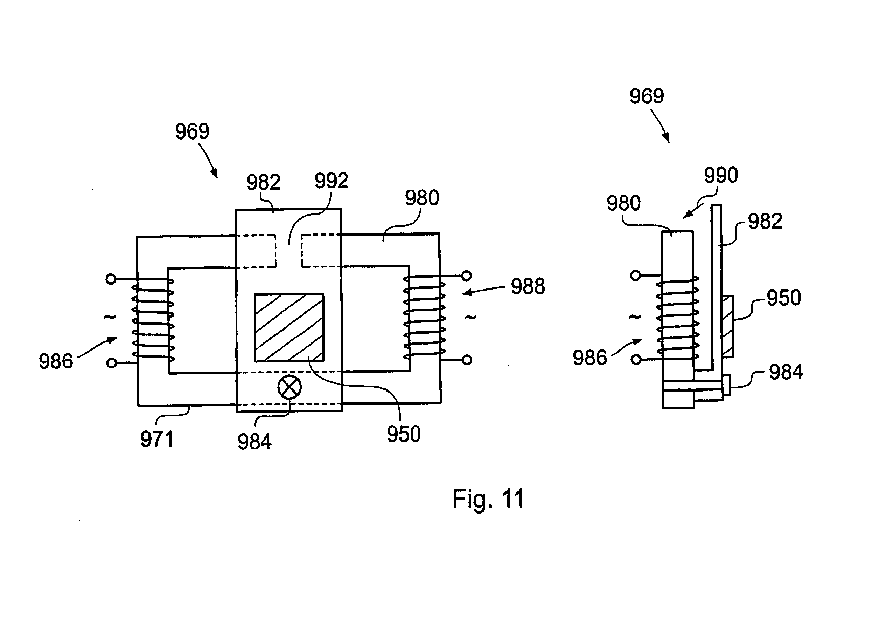

Figure 11 shows a mirror actuator 969 for moving a mirror 950. Such a mirror actuator 969 may be used in conjunction with the reading arrangement 930 described herein. The mirror actuator 969 comprises an electromagnet 971 operable to deflect a mild steel deflecting element 982 attached thereto. The electromagnet 971 comprises a first actuator coil 986 wound onto a first region of a magnetic core 980, and a second actuator coil 988 wound onto a second region of a magnetic core 980. The magnetic core 980 includes a gap 992 at which, when the electromagnet is energised, a magnetic deflecting field is produced.

The deflecting element 982 is connected to the magnetic core 980 by way of a threaded bolt 984. Tightening of the threaded bolt 984 secures the deflecting element 982 to the magnetic core 980 proximal one end of the deflecting element 982. An unsecured end of the deflecting element 982 distal the threaded bolt 984 is thereby able to move with respect to the magnetic core 980 under the influence of the magnetic deflecting field due to the attractive force generated between the magnetic deflecting field and the mild steel material of the deflecting element 982. The mirror 950 is mounted upon one part of the deflecting element 982 and moves in response to movement of the deflecting element 982.

In operation, an energising current is passed through the first and second actuator coils 986, 988. The first and second actuator coils 986, 988 can be connected in series such that the same energising current passes through both coils. Passing an initial energising current through the first and second actuator coils 986, 988, causes the deflecting element 982 to deflect in the direction shown by arrow 990, thereby also deflecting the mirror 950.

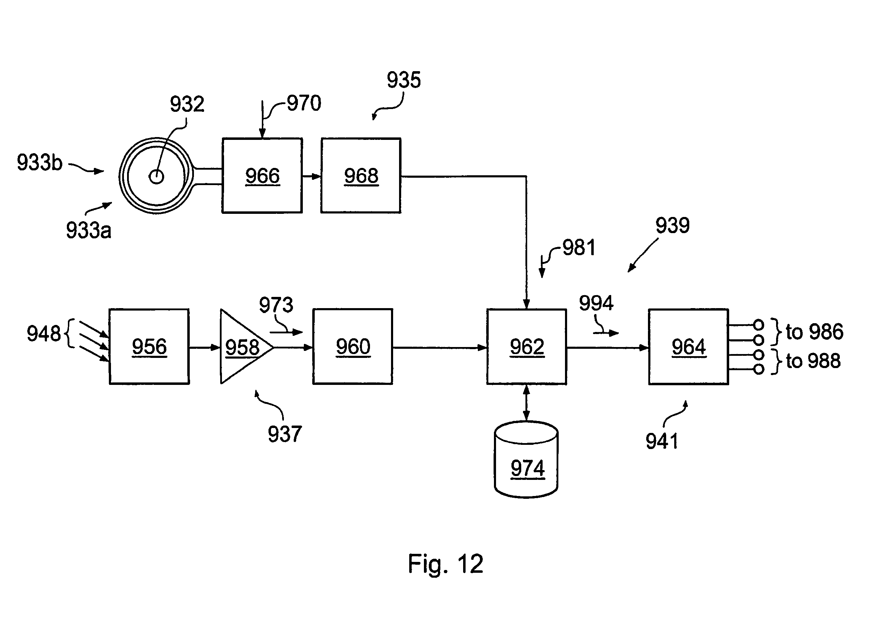

Figure 12 shows a field generation system 935, a detection system 937, a control and processing system 939 and a beam scanning system 941 forming, in conjunction with the reading arrangement 930 described above, a further part of one embodiment of a security device reading system.

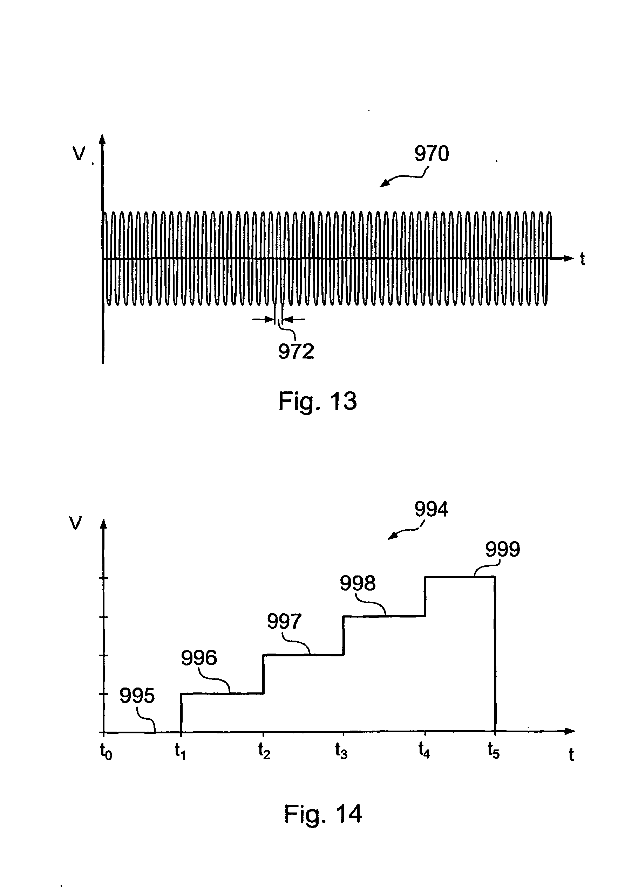

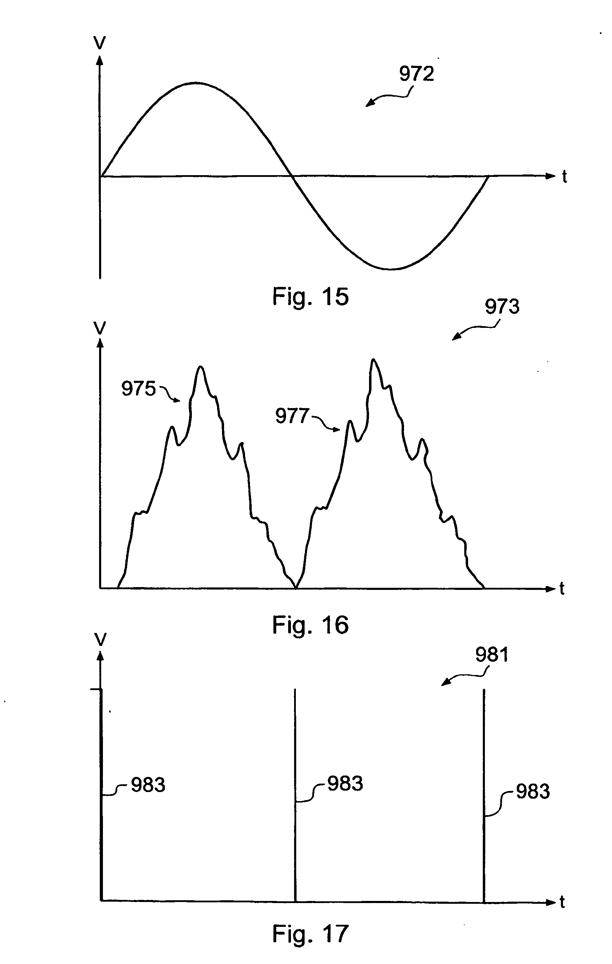

The field generation system 935 comprises components for producing a time varying applied magnetic field 932 for applying to a security device 900. The field generation system 935 comprises a driver circuit 966 operable to drive field generation coils 933a, 933b in response to a coil driving signal 970. The coil driving signal 970 is a periodic sinusoidal signal composed of a plurality of individual sinusoidal waveforms 972 oscillating at a frequency of 100 Hz (see Figures 13 and 15), that drives the drive field generation coils 933a, 933b to produce a sinusoidinally oscillating magnetic field oscillating at 100 Hz. In this embodiment, the 100 Hz sinusoidal waveform is produced by a conventional electronic oscillator circuit (not shown).

The field generation system 935 additionally comprises a cross-over detector 968 for detecting polarity changes in the coil driving signal 970. The cross-over detector 968 produces a synchronisation signal 981 in response to being driven by the driver circuit 966, as shown in Figure 17. The synchronisation signal 981 is composed of a sequence of spikes 983 each produced at a time when the polarity of the coil driving signal 970 changes. In various other embodiments, the same microcontroller that logs the Kerr signal is used to generate the applied field sequence (via a Digital to Analogue Converter), so the microcontroller can control synchronisation therebetween.

The detection system 937 comprises detector unit 956 for producing a signal in response to incident light 948. The detector unit 956 is coupled to an amplifier 958. Signals produced by the detector unit 956 are amplified by the amplifier 958 to provide a unipolar detector signal 973 (see Figure 16). The unipolar detector signal 973 is then fed into an analogue to digital converter (ADC) 960 for digitisation. The ADC 960 is a 10 bit device operating at a 10 kHz sampling frequency; thereby giving 1024 possible discrete data levels for each of the 100 samples taken over the time taken for one cycle of a 100 Hz cycle to complete.

In one embodiment, the ADC 960 operates at 10kHz and acquires around 100 data points per applied magnetic field cycle. The applied field is applied at a frequency of around 10kHz / 100 = 100 Hz. Data is averaged for around 0.5 sec, i.e. there are 50 data sets averaged for a single magnetic element. From this mean coercivity and jitter are measured. The process is then repeated for another magnetic element. In total around 8 magnetic elements are analysed in this way.

The control and processing system 939 is used to acquire measured data representative of the characteristic response of the security device 900 from the detection system 937, analyse that measured data and compare it with a premeasured characteristic response to determine if the security device 900 is genuine. In various embodiments, the control and processing system 939 also controls a beam scanning system 941 to cause the plane polarised laser beam 947 to move across the surface of the security device 900.

The control and processing system 939 comprises a processing unit 962 having an associated data store 974. In various embodiments, the processing unit 962 comprises a microprocessor or microcontroller and associated memory (not shown), including a ring buffer to which data samples from the ADC 960 are constantly fed when the ring buffer is enabled by the microprocessor.

When the security device reading system is started, the ring buffer is disabled by the microprocessor. In order to begin accumulating data into the ring buffer, a first spike 983 is received by the microprocessor. This triggers the microprocessor to begin a count of the number of synchronisation spikes 983 that are received and simultaneously to enable the ring buffer. Thus, data begins accumulating into the ring buffer in synchronisation with a polarity transition occurring in the applied magnetic field 932. When the microprocessor detects the Nth spike 983 (e.g. the 100th), a signal is sent to inhibit further accumulation of data into the ring buffer. The ring buffer at this time will contain N sets of data each accumulated during one half cycle of the applied magnetic field 972, with each set of data representing a digitised respective portion 975, 977 of the unipolar detector signal 973 at a respective time during the time duration t (t = N x applied magnetic field frequency / 2) of the data accumulation. (e.g. t = 0.5 second duration for 100 cycles at 100 Hz with N=100, and 5,000 individual measurements are made with an ADC rate set to 10 kHz).

For an embodiment that includes a beam scanning system 941 coupled to a mirror actuator 969, a processing unit 962 can also be used to provide control signals for moving the position of a mirror 950. The beam scanning system comprises a driver circuit 964 which includes a digital to analogue converter which sets the current provided through the first actuator coil 986 and the second actuator coil 988. The switching circuitry is configured to connect the first and second actuator coils 986, 988 in series, and to apply a driving current in proportion to a control voltage 994 (see Figure 14) provided by the processing unit 962.

In one embodiment, the ring buffer accumulates several sets comprising N sets of data. Once a set of N sets of data has been accumulated, the ring buffer is disabled by the microprocessor until the N sets of data have been stored in the store 974. The processing unit 962 then increases the control voltage 994 to cause the mirror 950 to deflect a plane polarised beam 947 onto a further area of the security device 900. After a short delay period to allow the mirror actuator 969 to settle, the microprocessor awaits a first spike 983 and subsequently begins to acquire the next N sets of data. This process continues until N sets of data have been accumulated and stored for each position of the mirror 950.

As indicated above, data sets can be accumulated in a variety of manners. Once acquired, the data can be processed to extract a variety of information regarding the measured characteristic signal response. Standard algorithms can be applied to the data sets to calculate the mean measured coercivity and/or jitter as given by a measure of the standard deviation of coercivity measurements. Examples of such algorithms may be found, for example, in "Numerical Recipes in C: The Art of Scientific Computing," W. H. Press, S. A. Teukolsky, W. T. Vetterling and B. P. Flannery, (Cambridge University Press, Cambridge, 1993).

Data fitting can either be done by the same microprocessor/microcontroller that determines the measured characteristic signal response, or by a connected computer system. For example, where a remote data base stores the premeasured characteristic response, raw measured characteristic signal response data can be transmitted to a remote processor to perform a Gaussian fitting. Similarly, where used as part of a fraud detection system, a reader may be connected to a Palmtop computer which stores premeasured characteristic response data by downloading it from the internet, and compares it to the measured characteristic signal response. In various embodiments, Palm-top computers can be used as the interactive display of the reader and also as a means of accessing remote data bases, e.g. by using GSM telephones.

Various ways exist for determining the premeasured characteristic response of a security device. These ways vary according to the type of security device and depend, for example, on whether or not the premeasured characteristic response is stored/encoded on the security device; whether or not the premeasured characteristic response is encrypted; and whether or not a unique identifier is provided in association with the security device. All these possibilities provide feasible embodiments.

In various embodiments, a unique identifier and an encrypted premeasured characteristic response, comprising encoded data representing a mean coercivity and a standard deviation in measured jitter, are encoded onto a security device as a sequence of pits. The pits are formed in a direction co-linear with a beam scanning direction, as provided by a beam actuator 969. Prior to determining the measured characteristic response, the beam actuator 969 is driven to provide a beam at points on the security device where the pits are anticipated to be. At each such point, a signal from detector unit 956 is measured. High reflectivity indicates a logical zero for the data bit corresponding to the respective point, and low reflectivity indicates a logical zero.

Of course, the plane polarised laser beam 947 of various embodiments may be focussed using a lens system to provide a small focal spot size at a security device 900. Similarly, collecting optics may be provided in the beam path channel 942 to aid in collecting light reflected from the security device 900.

In various other embodiments, a smart card carries a security device and unique identifier and an encrypted premeasured characteristic response information are stored in the smart card. The smart card is read in a conventional manner and a measured characteristic response is measured as herein described.

In certain embodiments the magnetic elements of a security device themselves may be used to encode further information. They can, for example, encode a unique identifier by forming a pattern of shapes. Such security devices may be scanned to see firstly if any magnetic elements are present at various possible locations. A linear scan pattern of reflected signal can then be used to obtain a binary value identifier for the security device. A way of visualising this is to consider the pattern of the magnetic elements to represent a form of bar code.

For embodiments of a security device comprising magnetic elements that encode a unique identifier, a characteristic response may be measured, as hereinbefore described, for each individual element. Various readers may however only measure the characteristic response for a subset of the magnetic elements in order to speed up the reading process.

In an embodiment of a security device reading system, premeasured characteristic response information is stored in a database to which one or more processing units have access. The premeasured characteristic response information is preferably encrypted. Such a system may be distributed and comprise a remote server coupled through a network to one or more security device readers. A system according to this embodiment is operable to determine a unique identifier for each security device from the pattern of the magnetic elements, or by other means, and to retrieve premeasured characteristic response information corresponding to the unique identifier determined by the security device reading system. The premeasured characteristic response information can then be decrypted as necessary by a respective security device reader.

In embodiments of the security device reading system, once the information regarding the measured characteristic signal response has been extracted it is compared by the microprocessor to the premeasured characteristic response, possibly decrypted using a private asymmetric data key, to determine whether or not the security device can be classed as non-counterfeit. Such a comparison is made within a margin of error allowed for variations that are introduced, for example, by temperature fluctuations. For example, for mean coercivity/jitter this may be when the measured coercivity/jitter does not differ from the premeasured coercivity/jitter by more than one standard deviation of the distribution of mean coercivity/jitter values.

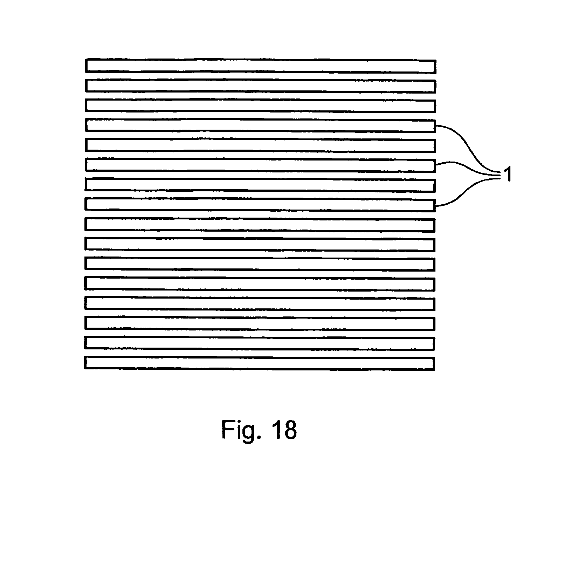

Referring to Figures 18 to 20, illustrations of three example structures of magnetic elements are provided in plan view.

In the first, a collection of regular rectangular magnetic elements (1) is shown schematically and not to scale. The material of the elements is $Ni_{80} Fe_{20}$. The material is laid down to a thickness of 40 nm. The overall area of the signature portion is 1 mm by 1 mm. The illustration is schematic only and not to scale. In particular it should be appreciated that each 1 mm by 1 mm area will comprise a very large plurality of elements of micron-scale width.

Moreover, any representation that the elements are of equal widths is schematic only. An array of 1 $\mu$m wide wires might be suitable for some applications. However, as has been noted above, any array of discrete groups of different wire width giving several discrete switching fields (for example as above described), or a continuously varying array with width varying in linear or other functional manner (for example as above described), will often be preferred.

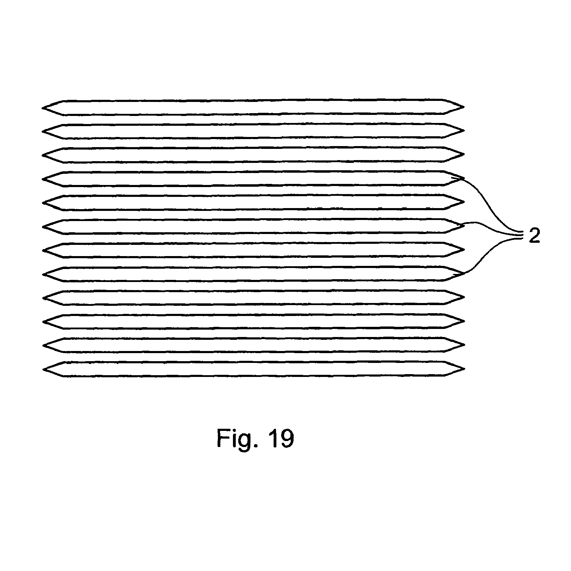

Figure 19 shows a generally similar structure having generally similar dimensions. The caveats above about the schematic nature of the illustrated widths again applies. However, in this instance, the rectangular portions (2) do not have square ends, but are provided with pointed ends. Differently shaped ends can affect the switching field and thus be preferred for certain applications. Any suitable end shape can be made use of without departing from the principles of the invention.

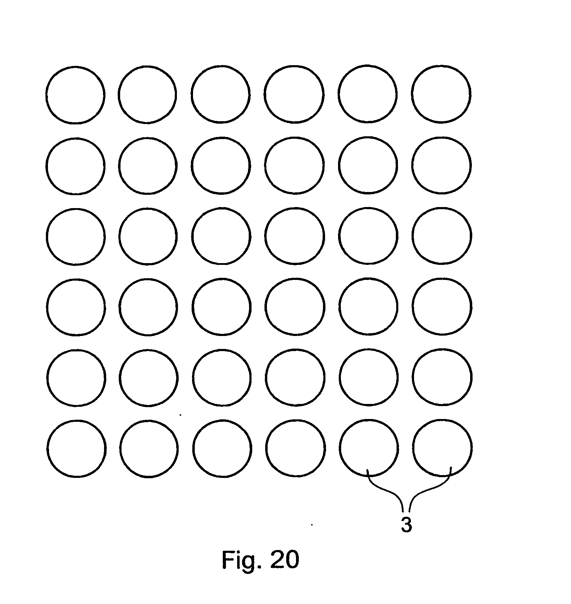

On Figure 20 a yet further alternative is shown, the signature portion comprising a generally square 1 mm by 1 mm array of circular magnetic microdots (3). In this instance material thickness is around 100 nm. Each microdot is 100 $\mu$m in diameter. Again this is illustrative only. Alternative shapes can be considered, and again elements of discretely or continuously varying size and/or shape, provided the basic requirement for a device in accordance with the invention that a reproducibly measurable baseline signature response is obtainable is met.

The film is laid down by any suitable method, in particular by optical lithography such as using the method herein described.

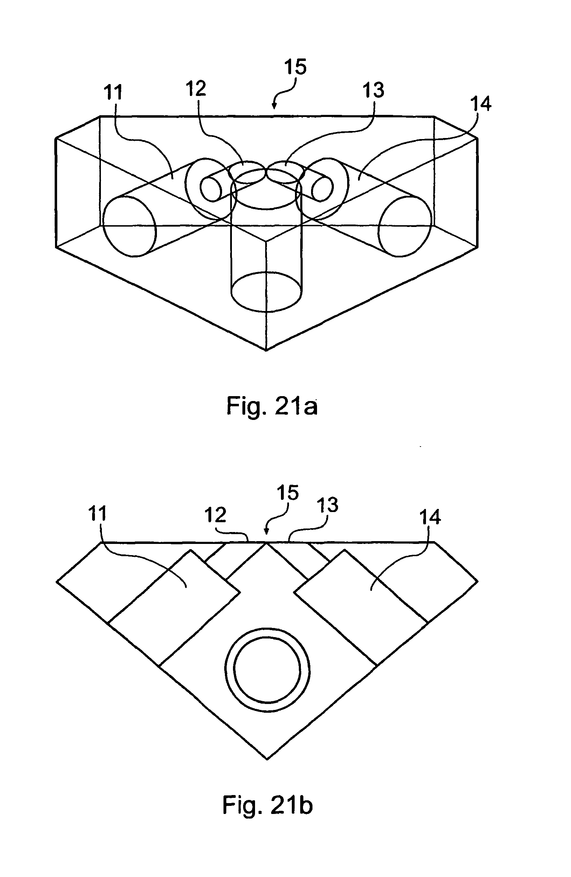

Figure 21 illustrates a mechanical drawing of an example of a small device suitable for measuring the magnetic response of a small area of thin magnetic film, such as a magnetic film comprising a magnetic signature in accordance with the invention, for example the signatures illustrated in Figures 18 to 20.

The device to measure the magnetic response comprises a high intensity light source, in this instance an infra-red light emitting diode within the housing (11). The light is collimated by a single pin-hole (12), of diameter in the size range 0.2 mm - 5 mm. The light is then reflected off the surface of the magnetic thin film placed in position (15) against it and passes through a second pin-hole (13), with diameter in the size range 0.2 mm - 5 mm, and preferably of the same diameter as the first pin-hole.

The reflected light then passes into a light sensitive device within the housing (14), which is by preference a phototransistor or photodiode sensitive to infrared radiation. In this illustrated embodiment the light sensitive device is selected to have low sensitivity to visible light, allowing the device to be used without optical screening. The device may also be painted black to reduce stray light reflections.

Magnetic field coils (not shown) are attached to the device to apply magnetic fields in the range 0-500 Oe to the magnetic material under test. In the case of the magnetic material under test comprising an array of elongated elements, such as rectangles, by preference the magnetic field coils are oriented so as to apply a field in the plane of the film and either along the long-axis of the elongated structures or at an angle to the long-axis in the range 0° - 60°. Additional magnetic field coils can be present to apply an additional field transversely to the long-axis of the wire.

The phototransistor or other light receiving device is connected to suitable electronics (not shown) which record the reflected intensity from the magnetic material while an alternating current is passed through the coils generating the applied magnetic field. Signal processing electronics using a Digital Signal Processor chip or a Microcontroller chip record measured responses over a number of cycles of the applied magnetic field and add them together coherently to reduce noise. The number of cycles recorded will be such that the total acquisition time does not exceed 10 seconds, and for convenience will not exceed 5 seconds. The signal processing electronics then identifies the mean switching field for each of the major switching transitions in the recorded signal. These are then passed to other electronics (not shown) which acquire and if necessary deciphers the pre-recorded baseline response from a magnetic strip, smart card, optical bar code, or from a remote textual source or electronic data store or other means, or alternatively transmits the measured response to a remote data comparator having access to the prerecorded baseline response, and a comparison is made.

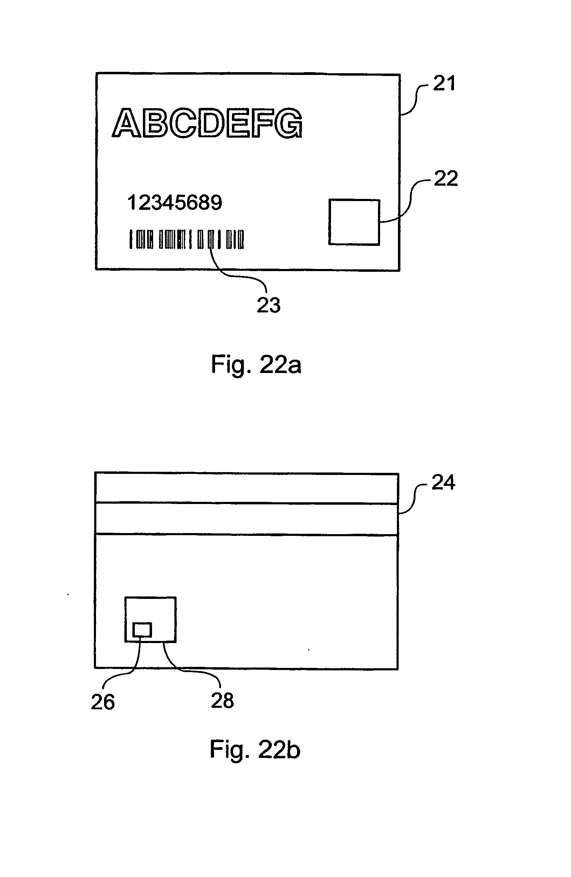

Figure 22 illustrates the application of the present invention to a smart chipped card of otherwise generally conventional design. The card (21), typically sized and shaped as a credit card or the like, and which may indeed be used as a credit card or the like, is illustrated in plan view both from above (A) and from below (B). The card carries some alphanumeric information, but its main information storage system is the smart chip (22). This is backed up by optional bar code (23), and magnetic stripe (24) which is typically provided for backward compatibility with magnetic stripe only systems.

A magnetic signature device (26) comprising a 1 mm by 1 mm array of magnetic elements of appropriate design in accordance with the invention is applied on the rear of the smart card. For convenience, in the example shown, it sits within the foot print of the smart chip itself as illustrated by the broken line (28). For many applications it might be convenient to sit the magnetic element (26) within this footprint. An alternative approach to achieve the same effect might be to incorporate the relatively small 1 mm wide magnetic signature device into a specially enlarged space between contacts on the smart chip. However, such placement is purely for convenience, and the magnetic elements (26) could be placed elsewhere on the card.

At the time of manufacture of the card an initial baseline signature reading is taken. One way of doing this is to use a scanning magnetometer. In the illustrated embodiment of a smart card, the baseline response is stored on the card, having first been digitally signed using an asymmetric encryption algorithm such as RSA. The public key can then be made available to a user and/or stored on a reader terminal or even on the card itself without compromising security. The signature can then be used to verify that the card is a genuine product of the manufacturer, and to eliminate the threat of fraudulent misuse of cloned copies of the card, which constitutes an increasing source of both financial transaction fraud and identity fraud.

In use, the card is read by a suitable card reader, in particular by a card reader incorporating a signature device reader such as that illustrated in Figure 21. The de :e reader may be incorporated into an existing smart card reader. For example, w the embodiment shown, the reading device for the magnetic element needs to read opposite side of the card from that read by the smart card reader, and so can be incorporated into a conventional smart card reader with relatively little engineering difficulty. In this way, cards and readers remain backwards compatible to conventional card/reader technology not having the identification and authentication system herein described.

The reader measures an actual response from the card. An expected baseline response is also stored upon the card. This can be stored in any readable form, but is conveniently incorporated into the card in one of the existing data storage devices. For example, the baseline signature may be recorded in its encrypted form on the smart chip (22), the bar code (23) or the magnetic strip (24). The reader is thus able to read both the actual magnetic signature and the predetermined and prerecorded expected magnetic signature. The reader is adapted to compare these, within certain tolerance limits, and to indicate whether the card is authenticated or not as a result of that comparison.

The smart card in accordance with various embodiments of the invention will be applicable to all circumstances where conventional smart card technology is being used, including without limitation bank and credit cards, secure information storage cards, identification and authentication cards and the like. It provides a means of authenticating the card as genuine, and thus provides a significant obstacle to fraudulent misuse of counterfeit copies of original cards.

The system represented by the embodiment in Figure 22 is a simple system, in which a device in accordance with various embodiments of the invention serves merely to authenticate the card as a genuine manufactured product and thus to detect counterfeit copies, and in consequence the predetermined baseline response is conveniently stored upon the card. It will be readily understood that such a system is only an example mode of operation. In one alternative, the original "expected" signature could be stored elsewhere. For example, in relation to the use of a card as illustrated in Figure 22 as part of a financial services system, for example as a credit card, a system can be envisaged where a plurality of cards are in issuance, where a plurality of readers are in use, and where the readers comprise a distributed network with a central data store such as will already hold customer details being further adapted to process signature information for verification purposes in accordance with the principles herein described. Other modes of operation will also readily suggest themselves.

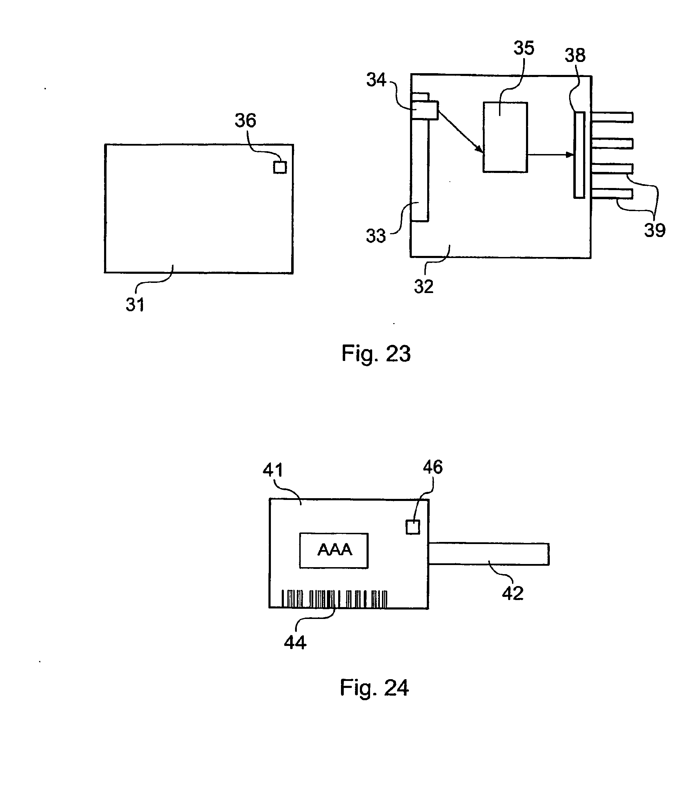

In Figure 23 an illustration is provided of the use of an embodiments of the present invention in a lock and key arrangement. A key card (31) of suitable robust material, for example of a suitable plastic material, is provided with a device (36) comprising a 1 mm by 1 mm array of magnetic elements as previously described.

The key card is provided in association with a card reader/lock arrangement illustrated schematically by the remainder of Figure 23.

The lock (32) incorporates a slot (33) into which the end of the key card (31) can be received. When appropriately positioned therein, the device (36) sits adjacent a reader (34) of the general design illustrated in Figure 21.

The reader (34) obtains a reading of the magnetic response from the device (36) in the predescribed manner, and passes this response to a control unit (35). The control unit (35) stores or otherwise has access to the predetermined expected response, for example storing this within the lock, optionally in encrypted form. It effects the comparison, and in the event that a match is found within predetermined tolerances, passes an instruction to the control means (38) to actuate the lock levers (39) and open the lock.

Although the example illustrated in Figure 23 is an electromechanical lock, it will of course be understood that the principles of the present invention are equally applicable to all circumstances where a physical or a virtual locking means or other means of access control might be considered. For example, without limitation, a device along the lines of the embodiment illustrated in Figure 23 could be used in conjunction with an electronic lock for a door or other closure, in conjunction with an electronic ignition for a vehicle, in conjunction with an electronic immobiliser for a vehicle, as a means of controlling access to a piece of electronic equipment, for example by requiring insertion before the equipment operates, as a means of restricting access to a particular service etc.

In the illustrated embodiment, a single card is illustrated in association with the lock. In practice, even for simple single-user locks it is likely to be necessary to provide several keys. It is in the nature of the present invention that these will inherently have different signature devices. Accordingly, the lock would need to store and respond to baseline signatures for each of these devices. More complex modes of operation can also be envisaged where a lock provides for access for a plurality of users, or indeed where a plurality of locks are provided in association with a plurality of users.

In a first example of such operation, a plurality of locks and a plurality of keys are provided in association with a multiple use entry system into a secure area. In a second example of such a mode of operation, a plurality of operator cards are provided to control operation of multiple user office equipment. In these examples, all authorised base line signatures may be stored on each lock, or alternatively the locks may be linked together on a distributed network to a central database storing details of the cards of all authorised users. Such a system allows not only good security because of the difficult of producing counterfeit cards, but also allows control and monitoring of access in an active way.

A further embodiment of the invention is illustrated in Figure 24. In Figure 24, a signature device in accordance with the invention (46) is incorporated on a label attachable to an item to be identified/protected. The label comprises a plastic tab (41) which optionally incorporates alphanumeric information; a bar code (44) etc. to store, for example identification information, information of origin, pricing information or the like about item to be labelled. The tab (41) is attached to an item to be labelled by the attachment strap (42). In the embodiment illustrated, the attachment strap (42) is intended as a simple loop attachment. Attachment may be releasable or permanent. Where security and permanence of attachment of the label are of particular importance a more complex attachment would be readily envisaged which might for example include locking mechanisms, tamper prevention mechanisms, tamper indication mechanisms and the like.

The embodiment of Figure 24 allows labelling of items in either a temporary or permanent manner where it is not practical or desirable to incorporate a device in accordance with the invention directly onto the item itself. Example modes of use include without limitation improved security airline luggage labels, authenticity labels for high value branded items, in particular clothing and the like; origin and identity labels for the same, for stock control purposes, and for example for identifying original and hence controlling unauthorised importation of genuine branded articles intended for another market; marking of items for stock control purposes; price marking of items, labels being used in such a way as to make it difficult for a purchaser to transfer a (lower) price label from another item to obtain goods at a fraudulently low price.

The normal mode of operation of a label of the type illustrated in Figure 24 will be authentication. Accordingly, the prerecorded signature information will usually be stored on the tab (41). The prerecorded information will be stored in any suitable machine readable form. In the example given it could be incorporated in the bar code. A reader will be provided adapted to read both the magnetic signature of the device (46) and the encrypted expected signature, and to effect a comparison to authenticate the label. The security effectiveness of the label lies in that it is very difficult to copy, since the random nature of the signature means that a copied label will be immediately identifiable as such.

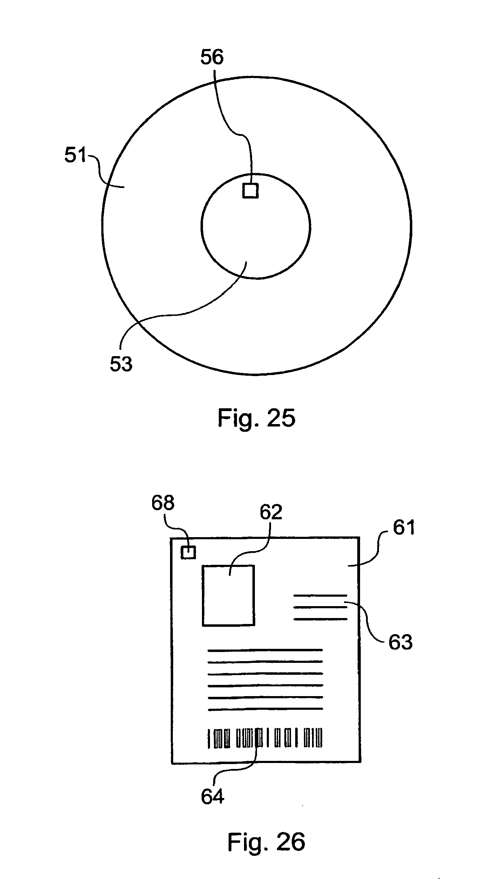

Figure 25 illustrates a data storage disk such as a CD, DVD or the like to which a device in accordance with the invention has been applied. The disc (51) incorporates a magnetic signature tab (56) comprising magnetic elements as above described preferably within the dead area (53) not otherwise carrying data. An encrypted predetermined reading of the signature (56) is provided elsewhere on the disc.

At its simplest, in a first mode of operation, the system allows the manufacturer to authenticate original CDs/DVDs, to identify counterfeit copies, and in association with a suitable stock control system to track origin and destination of genuine originals, and to identify unauthorised importation and the like.

In a more advanced mode of operation, disc readers can be manufactured which incorporate device readers to read the device (56) and to authenticate the disc, and which will be disabled from playing unauthorised copies. It is also possible to envisage a system whereby such modified players can be used in conjunction with the identification/ authentication system of the invention as part of an end user licence arrangement.

Figure 26 is an example of the use of the invention on a formal identification document. Such a document might be an identification or authorisation document, such as a passport, driver's licence, authorisation or qualification certificate or the like, an identity or authorisation certification intended to accompany, verify or otherwise identify an article, or any other document where counterfeit copies might be a problem.

The document (61) in the example includes visual information (62), for example a photograph, written information (63), and a bar code (64). It might include other data storage or security devices.

A device comprising magnetic elements as above (66) is incorporated into the document. This device is readable in the manner above described. In one mode of operation, the device (66) serves a simple authentication purpose, and an encrypted prerecorded reading of its expected magnetic response is also incorporated into the document. Conveniently in the example given this could be incorporated into the bar code, or otherwise stored in a readable form. However, it will be appreciated that in more sophisticated systems it would be possible to store the expected magnetic signature remotely, optionally with further identification and/or other security details.

The device in accordance with the invention applied to documentation in this way serves primarily as a form of copy protection. It therefore serves as a cheap and convenient authentication device in all circumstances where there is a vulnerability to fraud arising from the counterfeiting of genuine originals, for example in relation to identification documents, formal certificates, financial paperwork such as cheques, paper money and the like, important legal documents, and other such documentation.

Viewed from another aspect, there is provided a security device means comprising at least one magnetic element means, wherein said magnetic element means is responsive to an applied magnetic field to provide a characteristic response.

Viewed from a further aspect, there is provided a method of manufacturing a security device, comprising the step of providing at least one magnetic element, wherein said at least one magnetic element provides a characteristic response in response to an applied magnetic field.

Viewed from yet another aspect, there is provided a system for reading a security device means, comprising: a magnetic field generation means for applying an applied magnetic field to a security device; and a detection means for measuring one or more parameter representative of a measured characteristic response of said security device in response to said applied magnetic field, wherein said system is operable to compare said parameter(s) representative of a measured characteristic response to one or more respective parameter(s) of a premeasured characteristic response to determine whether respective of said parameters are substantially equivalent.

Viewed from another aspect, there is provided a method for reading a security device, comprising the step of applying an applied magnetic field to a security device; the step of measuring one or more parameter representative of a measured characteristic response of said security device in response to said applied magnetic field; and the step of comparing said parameter(s) representative of a measured characteristic response to one or more respective parameter(s) of a premeasured characteristic response to determine whether respective of said parameters are substantially equivalent.

Viewed from a further aspect, there is provided a product means comprising the security device means as herein described.

Those of ordinary skill in the art will realise that other techniques may be used to produce security devices. For example, instead of producing security devices using a lift off/wet etching process, ion beam etching may be used. Those of ordinary skill in the art will also be aware that various embodiments of security devices can be manufactured using various substrates, including, for example, silicon, glass, plastic, metals etc.

While certain of the example materials described herein are ferromagnetic, those skilled in the art will realise that other types of magnetic and/or non-magnetic elements may be used provided they give rise to a suitable measurable characteristic response. For example, non-magnetic elements may be used where such elements produce a measurable response in an applied magnetic field, where that response can be measured to provide a characteristic response.

Those of ordinary skill in the art will be aware of various techniques that can be used to manufacture and characterise magnetic elements suitable for security devices. An example of one such manufacturing technique and one such characterisation process can be found in "Optimised process for the fabrication of mesoscopic magnetic structures," Adeyeye et al, Journal of Applied Physics, Vol. 82, No. 1, pp. 469-473, 1 July 1997, which investigated the effect of magnetic element size upon the magnetic properties thereof.

Embodiments produced in accordance with the invention may incorporate reflectivity/contrast enhancement measures either alone, or in any combination. Materials such as gold, aluminium, chromium and/or tantalum can be laid beneath and/or above magnetic elements to enhance their reflectivity and/or the Kerr signal that the magnetic elements provide. Areas of a security device may be treated to reduce their reflectivity in order to improve the reflectivity/contrast between the magnetic elements and their surrounding areas.

In various embodiments, magnetic elements in the shape of wires or flattened wires are provided. The end shape of such wires can be controlled during manufacture of a security device. An angled end, for example, from about 60° to about 90° may be provided. In various other embodiments flattened ends and/or semi-circular ends may be provided to influence magnetic nucleation. The shape of the ends may be chosen to provide improved magnetic switching characteristics.

Although the invention has been described in relation to particular embodiments, it will be appreciated that the invention is not limited thereto, and that many variations are possible falling within the scope of the invention.

It will be appreciated that certain of various embodiments of the invention described above are implementable and/or configurable, at least in part, using a data processing apparatus, such as, for example, hardware, firmware and/or a computer configured with a computer program. The computer program can be stored on a carrier medium in data processing apparatus usable form. The carrier medium may be, for example, solid-state memory, optical or magneto-optical memory such as a readable and/or writable disk for example a compact disk and a digital versatile disk, or magnetic memory such as disc or tape, and the data processing apparatus can utilise the program to configure it for operation. The computer program may be supplied from a remote source embodied in a carrier medium such as an electronic signal, including radio frequency carrier wave or optical carrier wave.

Those of ordinary skill in the art will be aware that the description herein relates merely to illustrative examples of how the invention may be put into effect, and that many embodiments incorporating one or more components, e.g. of other embodiments, can be envisaged, along with further embodiments not explicitly described herein. For example, data acquisition rates, sample rates, the number and size of sample quantisation levels, applied magnetic field cycling rates, the number of accumulated data sets, etc. may all be varied/selected as desired. Such parameters may be varied programmably, for example, under the control of a microprocessor, possibly in dependence upon various measured conditions, such as, for example, temperature.

**Claims**

1. A security device comprising at least one magnetic element, wherein said at least one magnetic element is responsive to an applied magnetic field to provide a characteristic response, **characterised in that** said at least one magnetic element is a magnetically soft material that comprises structural defects that cause brittle mode switching in which the growth of a single magnetic domain dominates the change in magnetisation of a respective magnetic element.

2. The security device of Claim 1, wherein said at least one magnetic element is supported by a substrate.

3. The security device of Claim 2, wherein said at least one magnetic element is supported on said substrate.

4. The security device of any preceding Claim, wherein said at least one magnetic element is responsive to said applied magnetic field to switch the magnetisation or magnetic polarisation of said at least one magnetic element.

5. The security device of Claim 1, wherein said at least one magnetic element is a magnetically soft material selected from one or more of: nickel, iron, cobalt and alloys thereof with each other or silicon, such as nickel iron alloy, cobalt iron alloy, iron silicon alloy or cobalt silicon alloy.

6. The security device of any preceding claim, wherein said magnetically soft material is a permalloy material.

7. The security device of any preceding Claim, wherein said at least one magnetic element is substantially wire-shaped or flattened wire shaped.

8. The security device of any preceding Claim, wherein said at least one magnetic element is backed by a light reflective layer.

9. The security device of any preceding Claim, wherein said at least one magnetic element is provided proximal a reduced light reflectivity portion of said security device.

10. The security device of any preceding Claim, comprising a plurality of said at least one magnetic elements.

11. The security device of Claim 10, wherein said plurality of magnetic elements is arranged to provide a linear pattern.

12. The security device of Claim 10, wherein said plurality of magnetic elements is arranged to provide a two-dimensional pattern.

13. The security device of Claim 11 or Claim 12, wherein said pattern encodes an identifier.

14. The security device of any preceding Claim, further comprising a unique identifier incorporated therewith.

15. The security device of claim 14, wherein said unique identifier is provided by way of one or more of: an optically readable bar code; one or more optical indicia; a magnetically encoded identifier; and an electronic identifier.

16. The security device of claim 15, mounted upon a smart-card, wherein said electronic identifier is provided by a smart-card chip provided on said smart-card.

17. The security device of any preceding Claim, wherein premeasured characteristic response information representing one or more measurable parameters of said characteristic response is stored on said security device.

18. The security device of Claim 17, wherein said premeasured characteristic response information is in encrypted form.

19. A method of manufacturing a security device, comprising:

   providing at least one magnetic element comprising structural defects, wherein said at least one magnetic element is a magnetically soft material that provides a brittle mode switching characteristic response in response to an applied magnetic field.

20. The method of Claim 19, comprising providing said at least one magnetic element on a substrate.

21. The method of Claim 19 or Claim 20, comprising forming said at least one magnetic element using a lift-off or wet etching process.

22. The method of Claim 19 or Claim 20, comprising forming said at least one magnetic element using an ion beam etching process.

23. The method of any one of Claims 19 to 22, comprising measuring the magnitude(s) of one or more magnetic parameters of said at least one magnetic element.

24. The method of Claim 23, comprising measuring one or more of coercivity and jitter values.

25. The method of Claim 23 or Claim 24, comprising using the measured magnitude(s) of said one or more magnetic parameters to represent premeasured characteristic response information.

26. The method of Claim 25, comprising encrypting said premeasured characteristic response information.

27. The method of Claim 25 or Claim 26, comprising storing said premeasured characteristic response information in encrypted or unencrypted form on said security device.

28. The method of Claim 25 or Claim 26, comprising storing said premeasured characteristic response information in encrypted or unencrypted form in a storage medium remote from said security device.

29. The method of Claim 28, comprising storing said premeasured characteristic response information in encrypted or unencrypted form in a database.

30. The method of any one of Claims 19 to 29, further comprising providing said security device with a unique identifier.

**31.** The method of Claim 30 when dependant upon any one of Claims 26 to 29, comprising storing a representation of said unique identifier in association with said premeasured characteristic response information.

**32.** A system for reading a security device, comprising:

a magnetic field generation system for applying a magnetic field to a security device; and a detection system for measuring one or more parameters representative of a brittle mode switching measured characteristic response of said security device in response to said magnetic field,

wherein said system is operable to compare said one or more parameters representative of a brittle mode switching measured characteristic response to one or more respective parameters of a brittle mode switching premeasured characteristic response to determine whether respective measured and premeasured parameters are substantially equivalent.

**33.** The system of Claim 32, wherein the magnetic field generation system is operable to apply a time varying magnetic field to a security device.

**34.** The system of Claim 32 or Claim 33, wherein a light beam is used to interrogate said security device.

**35.** The system of any one of Claims 32 to 34, wherein said light beam is a visible or near-infrared beam produced by a laser diode.

**36.** The system of any one of Claims 32 to 35, wherein said parameters represent one or more of coercivity and jitter values.

**37.** The system of any one of Claims 34 to 36, wherein said detection system incorporates magneto-optic Kerr effect detection apparatus for detecting changes induced in said light beam by magnetic elements of said security device.

**38.** The system of Claim 37, wherein said magneto-optic Kerr effect detection apparatus is configured to operate in transverse mode.

**39.** The system of any one of Claims 34 to 38, further operable to deflect said light beam across the surface of said security device.

**40.** The system of any one of Claims 32 to 39, further operable to read a unique identifier from said security device.

**41.** The system of Claim 40, wherein said unique identifier is identified by recognising a pattern of magnetic elements supported by said security device.

**42.** The system of Claim 40 or 41, wherein said unique identifier is identified by reading one or more of: an optically readable bar code; one or more optical indicia; a magnetically encoded identifier; and an electronic identifier.

**43.** The system of any one of Claims 32 to 42, further operable to determine said one or more respective parameters of the premeasured characteristic response by reading said one or more parameters from said security device.

**44.** The system of any one of Claims 32 to 43, further operable to determine said one or more respective parameters of the premeasured characteristic response by reading said one or more parameters from a database.

**45.** The system of Claim 44, wherein said database is remotely located from said detection system.

**46.** The system of any one of Claims 32 to 45, further operable to decrypt premeasured characteristic response information where it is read or provided in encrypted form.

**47.** A method for reading a security device, comprising:

applying a magnetic field to a security device; measuring one or more parameters representative of a brittle mode switching measured characteristic response of said security device in response to said magnetic field; and comparing said one or more parameters representative of a brittle mode switching measured characteristic response to one or more respective parameter(s) of a brittle mode switching premeasured characteristic response to determine whether respective measured and premeasured parameters are substantially equivalent.

**48.** The method of Claim 47, comprising applying a time varying magnetic field to a security device.

**49.** The method of Claim 47 or Claim 48, wherein measuring of one or more parameters representative of a measured characteristic response of said security device in response to said magnetic field comprises measuring one or more of coercivity and jitter values.

**50.** The method of any one of Claims 47 to 49, comprising interrogating said security device using a light beam.

**51.** The method of any one of Claims 47 to 50, comprising operating a laser to produce a visible or near-infrared beam.

**52.** The method of Claim 50 or Claim 51, comprising detecting changes induced in said light beam by magnetic elements of said security device using the magneto-optic Kerr effect.

**53.** The method of Claim 52, comprising using the magneto-optic Kerr effect transverse mode.

**54.** The method of any one of Claims 50 to 53, comprising deflecting said light beam across the surface of said security device.

**55.** The method of any one of Claims 47 to 54, comprising reading a unique identifier from said security device.

**56.** The method of Claim 55, comprising identifying said unique identifier by recognising a pattern of magnetic elements supported by said security device.

**57.** The method of Claim 55 or 56, comprising identifying said unique identifier by reading one or more of: an optically readable bar code; one or more optical indicia; a magnetically encoded identifier; and an electronic identifier.

**58.** The method of any one of Claims 47 to 57, comprising determining said respective one or more parameters of the premeasured characteristic response by reading said one or more parameters from said security device.

**59.** The method of any one of Claims 47 to 58, comprising determining said one or more respective parameters of the premeasured characteristic response by reading said one or more parameters from a database.

**60.** The method of Claim 59, comprising accessing a database remotely located from said detection system.

**61.** The method of any one of Claims 47 to 60, further comprising decrypting premeasured characteristic response information where it is read or provided in encrypted form.

**62.** A product comprising the security device of any one of Claims 1 to 18.

**63.** The product of Claim 62, comprising one or more of: a document; a passport; an identity card; a compact disc; a digital versatile disc; a software product; packaging; an item of clothing; an item of footwear; a smart-card; a credit or bank card; a cosmetic item; an engineering part; an accessory; and any other goods and/or items of commerce, whether manufactured or otherwise.

**Patentansprüche**

**1.** Sicherheitsvorrichtung mit mindestens einem magnetischen Element, wobei das mindestens eine magnetische Element auf ein angelegtes magnetisches Feld so reagiert, daß eine charakteristische Reaktion bereitgestellt wird, **dadurch gekennzeichnet, daß** das mindestens eine magnetische Element ein weichmagnetisches Material ist, das strukturelle Defekte aufweist, die ein Umschalten in einen spröden Zustand (brittle mode) bewirken, bei dem das Wachstum einer einzigen magnetischen Domäne die Änderung der Magnetisierung eines entsprechenden magnetischen Elements dominiert.

**2.** Sicherheitsvorrichtung nach Anspruch 1, **dadurch gekennzeichnet, daß** das mindestens eine magnetische Element von einem Substrat gehalten wird.

**3.** Sicherheitsvorrichtung nach Anspruch 2, **dadurch gekennzeichnet, daß** das mindestens eine magnetische Element auf dem Substrat gehalten wird.

**4.** Sicherheitsvorrichtung nach einem der vorhergehenden Ansprüche, **dadurch gekennzeichnet, daß** das mindestens eine magnetische Element auf das angelegte magnetische Feld so reagiert, daß die Magnetisierung oder die magnetische Polarisation des mindestens einen magnetischen Elements geschaltet wird.

**5.** Sicherheitsvorrichtung nach Anspruch 1, **dadurch gekennzeichnet, daß** das mindestens eine magnetische Element ein weichmagnetisches Material ist, das aus einem oder mehreren der folgenden Materialien ausgewählt ist: Nickel, Eisen, Kobalt und Legierungen davon miteinander oder mit Silizium, wie z. B. einer Nickel-Eisen-Legierung, einer Kobalt-Eisen-Legierung, einer Eisen-Silizium-Legierung oder einer Kobalt-Silizium-Legierung.

**6.** Sicherheitsvorrichtung nach einem der vorhergehenden Ansprüche, **dadurch gekennzeichnet, daß** das weichmagnetische Material ein Mu-Metall ist.

**7.** Sicherheitsvorrichtung nach einem der vorhergehenden Ansprüche, **dadurch gekennzeichnet, daß** das mindestens eine magnetische Element im wesentlichen drahtförmig oder abgeflacht drahtförmig ist.

8. Sicherheitsvorrichtung nach einem der vorhergehenden Ansprüche, **dadurch gekennzeichnet, daß** das mindestens eine magnetische Element mit einer lichtreflektierenden Schicht kaschiert ist.

9. Sicherheitsvorrichtung nach einem der vorhergehenden Ansprüche, **dadurch gekennzeichnet, daß** das mindestens eine magnetische Element nahe einem Teil der Sicherheitsvorrichtung mit einer reduzierten Lichtreflektivität vorgesehen ist.

10. Sicherheitsvorrichtung nach einem der vorhergehenden Ansprüche mit einer Mehrzahl der mindestens einen magnetischen Elemente.

11. Sicherheitsvorrichtung nach Anspruch 10, **dadurch gekennzeichnet, daß** die Mehrzahl von magnetischen Elementen so angeordnet ist, daß sie ein lineares Muster bildet.

12. Sicherheitsvorrichtung nach Anspruch 10, **dadurch gekennzeichnet, daß** die Mehrzahl von magnetischen Elementen so angeordnet ist, daß sie ein zweidimensionales Muster bildet.

13. Sicherheitsvorrichtung nach Anspruch 11 oder 12, **dadurch gekennzeichnet, daß** das Muster einen Identifikator verschlüsselt.

14. Sicherheitsvorrichtung nach Anspruch einem der vorhergehenden Ansprüche, darüber hinaus mit einem einzigartigen Identifikator, der darin eingebaut ist.

15. Sicherheitsvorrichtung nach Anspruch 14, **dadurch gekennzeichnet, daß** der einzigartige Identifikator in Form eines oder mehrerer der folgenden Elemente vorgesehen ist: einem optisch lesbaren Strichcode, einer oder mehrerer optischer Markierungen, einem magnetisch verschlüsselten Identifikator und einem elektronischen Identifikator.

16. Sicherheitsvorrichtung nach Anspruch 15, die auf einer Chipkarte befestigt ist, wobei der elektronische Identifikator durch einen Chipkartenchip, der auf der Chipkarte vorgesehen ist, bereitgestellt wird.

17. Sicherheitsvorrichtung nach einem der vorhergehenden Ansprüche, **dadurch gekennzeichnet, daß** eine vorab gemessene charakteristische Reaktionsinformation, die einen oder mehrere meßbare Parameter der charakteristischen Reaktion darstellt, in der Sicherheitsvorrichtung gespeichert ist.

18. Sicherheitsvorrichtung nach Anspruch 17, **dadurch gekennzeichnet, daß** die vorab gemessene charakteristische Reaktionsinformation in verschlüsselter Form vorliegt.

19. Verfahren zum Herstellen einer Sicherheitsvorrichtung mit:

Bereitstellen mindestens eines magnetischen Elements mit strukturellen Defekten,

wobei das mindestens eine magnetische Element ein weichmagnetisches Material ist, das eine charakteristische Umschaltreaktion in einen spröden Zustand als Reaktion auf ein angelegtes magnetisches Feld bereitstellt.

20. Verfahren nach Anspruch 19, mit Bereitstellen des mindestens einen magnetischen Elements auf einem Substrat.

21. Verfahren nach Anspruch 19 oder 20, mit Bilden des mindestens einen magnetischen Elements, wobei ein Lift-off- oder Naßätzverfahren verwendet wird.

22. Verfahren nach Anspruch 19 oder 20, mit Bilden des mindestens einen magnetischen Elements, wobei ein lonenstrahlätzverfahren verwendet wird.

23. Verfahren nach einem der Ansprüche 19 bis 22, mit Messen der Stärke eines oder mehrerer magnetischer Parameter des mindestens einen magnetischen Elements.

24. Verfahren nach Anspruch 23, mit Messen eines oder mehrerer der Koerzitiv- und Jitter-Werte.

25. Verfahren nach Anspruch 23 oder 24, mit Verwenden der gemessenen Stärke des einen oder der mehreren magnetischen Parameter, um eine vorab gemessene charakteristische Reaktionsinformation darzustellen.

26. Verfahren nach Anspruch 25, mit Verschlüsseln der vorab gemessenen charakteristischen Reaktionsinformation.

27. Verfahren nach Anspruch 25 oder 26, mit Speichern der vorab gemessenen charakteristischen Reaktionsinformation in verschlüsselter oder unverschlüsselter Form in der Sicherheitsvorrichtung.

28. Verfahren nach Anspruch 25 oder 26, mit Speichern der vorab gemessenen charakteristischen Reaktionsinformation in verschlüsselter oder unverschlüsselter Form in einem Speichermedium, das von der Sicherheitsvorrichtung getrennt ist.

29. Verfahren nach Anspruch 28, mit Speichern der vorab gemessenen charakteristischen Reaktionsinformation in verschlüsselter oder unverschlüsselter Form in einer Datenbank.

**30.** Verfahren nach einem der Ansprüche 19 bis 29, darüber hinaus mit Ausstatten der Sicherheitsvorrichtung mit einem einzigartigen Identifikator.

**31.** Verfahren nach Anspruch 30, soweit er von einem der Ansprüche 26 bis 29 abhängig ist, mit Speichern einer Darstellung des einzigartigen Identifikators in Bezug auf die vorab gemessene charakteristische Reaktionsinformation.

**32.** System zum Lesen einer Sicherheitsvorrichtung mit:

einem magnetischen Felderzeugungssystem zum Anlegen eines magnetischen Feldes an eine Sicherheitsvorrichtung und
einem Erfassungssystem zum Messen eines oder mehrerer Parameter, die eine gemessene Umschaltreaktion in einen spröden Zustand der Sicherheitsvorrichtung als Reaktion auf das magnetische Feld darstellen,

wobei das System so betreibbar ist, daß es den einen oder die mehreren Parameter, die eine gemessene charakteristische Umschaltreaktion in einen spröden Zustand darstellen, mit einem oder mehreren entsprechenden Parametern einer vorab gemessenen charakteristischen Umschaltreaktion in einen spröden Zustand verglichen wird, um zu bestimmen, ob entsprechende gemessene und vorab gemessene Parameter im wesentlichen gleichwertig sind.

**33.** System nach Anspruch 32, **dadurch gekennzeichnet, daß** das magnetische Felderzeugungssystem so betreibbar ist, daß es ein zeitlich veränderliches magnetisches Feld an eine Sicherheitsvorrichtung anlegt.

**34.** System nach Anspruch 32 oder 33, **dadurch gekennzeichnet, daß** ein Lichtstrahl verwendet wird, um die Sicherheitseinrichtung abzufragen.

**35.** System nach einem der Ansprüche 32 bis 34, **dadurch gekennzeichnet, daß** der Lichtstrahl ein sichtbarer oder nahinfraroten Strahl ist, der von einer Laserdiode erzeugt wird.

**36.** System nach einem der Ansprüche 32 bis 35, **dadurch gekennzeichnet, daß** die Parameter einen oder mehrere der Koerzitiv- und Jitter-Werte darstellen.

**37.** System nach einem der Ansprüche 34 bis 36, **dadurch gekennzeichnet, daß** das Erfassungssystem eine magnetooptische Kerr-Effekt-Erfassungsvorrichtung zum Erfassen von Änderungen, die durch die magnetischen Elemente der Sicherheitsvorrichtung in dem Lichtstrahl hervorgerufen werden, verwendet.

**38.** System nach Anspruch 37, **dadurch gekennzeichnet, daß** die magnetooptische Kerr-Effekt-Erfassungsvorrichtung so eingerichtet ist, daß sie in einem Transversalmodus arbeitet.

**39.** System nach einem der Ansprüche 34 bis 38, das darüber hinaus so betreibbar ist, daß es den Lichtstrahl über die Oberfläche der Sicherheitsvorrichtung ablenkt.

**40.** System nach einem der Ansprüche 32 bis 39, das darüber hinaus so betreibbar ist, daß es einen einzigartigen Identifikator aus der Sicherheitsvorrichtung ausliest.

**41.** System nach Anspruch 40, **dadurch gekennzeichnet, daß** der einzigartige Identifikator durch Erkennen eines Musters von magnetischen Elementen, die von der Sicherheitsvorrichtung gehalten werden, identifiziert wird.

**42.** System nach Anspruch 40 oder 41, **dadurch gekennzeichnet, daß** der einzigartige Identifikator durch Auslesen eines oder mehrerer der folgenden Elemente identifiziert wird: einem optisch lesbaren Strichcode, einer oder mehrerer optischer Markierungen, einem magnetisch codierten Identifikator und einem elektronischen Identifikator.

**43.** System nach einem der Ansprüche 32 bis 42, das darüber hinaus so betreibbar ist, daß es den einen oder die mehreren entsprechenden Parameter der vorab gemessenen charakteristischen Reaktion durch Auslesen des einen oder der mehreren Parameter aus der Sicherheitsvorrichtung bestimmt.

**44.** System nach einem der Ansprüche 32 bis 43, das darüber hinaus so betreibbar ist, daß es den einen oder die mehreren entsprechenden Parameter der vorab gemessenen charakteristischen Reaktion durch Auslesen des einen oder der mehreren Parameter aus einer Datenbank bestimmt.

**45.** System nach Anspruch 44, **dadurch gekennzeichnet, daß** die Datenbank entfernt von dem Erfassungssystem angeordnet ist.

**46.** System nach einem der Ansprüche 32 bis 45, das darüber hinaus so betreibbar ist, daß es die vorab gemessene charakteristische Reaktionsinformation entschlüsselt, wenn sie ausgelesen wird oder in verschlüsselter Form bereitgestellt wird.

**47.** Verfahren zum Auslesen einer Sicherheitsvorrichtung mit:

Anlegen eines magnetischen Feldes an eine Sicherheitsvorrichtung,

Messen eines oder mehrerer Parameter, die eine gemessene charakteristische Umschaltreaktion in einen spröden Zustand der Sicherheitsvorrichtung als Reaktion auf das magnetische Feld darstellen, und

Vergleichen des einen oder der mehreren Parameter, die eine gemessene charakteristische Umschaltreaktion in einen spröden Zustand mit einem oder mehreren entsprechenden Parametern einer vorab gemessenen charakteristischen Umschaltreaktion in einen spröden Zustand vergleichen, um zu bestimmen, ob entsprechende gemessene und vorab gemessene Parameter im wesentlichen gleichwertig sind.

48. Verfahren nach Anspruch 47, mit Anlegen eines zeitlich veränderlichen magnetischen Feldes an eine Sicherheitsvorrichtung.

49. Verfahren nach Anspruch 47 oder 48, **dadurch gekennzeichnet, daß** das Messen eines oder mehrer Parameter, die für eine gemessene charakteristische Reaktion der Sicherheitsvorrichtung als Reaktion auf das magnetische Feld repräsentativ sind, das Messen eines oder mehrer der Koerzitiv- und Jitter-Werte umfaßt.

50. Verfahren nach einem der Ansprüche 47 bis 49, mit Abfragen der Sicherheitsvorrichtung, wobei ein Lichtstrahl verwendet wird.

51. Verfahren nach einem der Ansprüche 47 bis 50, mit Betreiben eines Lasers, um einen sichtbaren oder nahinfraroten Strahl zu erzeugen.

52. Verfahren nach Anspruch 50 oder 51, mit Erfassen von Änderungen, die von magnetischen Elementen der Sicherheitsvorrichtung in dem Lichtstrahl hervorgerufen werden, wobei der magnetooptische Kerr-Effekt verwendet wird.

53. Verfahren nach Anspruch 52, mit Verwenden des magnetooptischen Kerr-Effekts im Transversalmodus.

54. Verfahren nach einem der Ansprüche 50 bis 53, mit Ablenken des Lichtstrahls über die Oberfläche der Sicherheitsvorrichtung.

55. Verfahren nach einem der Ansprüche 47 bis 54, mit Auslesen eines einzigartigen Identifikators aus der Sicherheitsvorrichtung.

56. Verfahren nach Anspruch 55, mit Identifizieren des einzigartigen Identifikators durch Erkennen eines Musters von magnetischen Elementen, die von der Sicherheitsvorrichtung gehalten werden.

57. Verfahren nach Anspruch 55 oder 56, mit Identifizieren des einzigartigen Identifikators durch Auslesen eines oder mehrerer der folgenden Elemente: einem optisch lesbaren Strichcode, einem oder mehreren optischen Merkmalen, einem magnetisch verschlüsselten Identifikator und einem elektronischen Identifikator.

58. Verfahren nach einem der Ansprüche 47 bis 57, mit Bestimmen des entsprechenden oder der entsprechenden Parameter der vorab gemessenen charakteristischen Reaktion durch Auslesen des einen oder der mehreren Parameter aus der Sicherheitsvorrichtung.

59. Verfahren nach einem der Ansprüche 47 bis 58, mit Bestimmen des einen oder der mehreren entsprechenden Parameter der vorab gemessenen charakteristischen Reaktion durch Auslesen des einen oder der mehreren Parameter aus einer Datenbank.

60. Verfahren nach Anspruch 59, mit Zugreifen von dem Erfassungssystem auf eine entfernt angeordnete Datenbank.

61. Verfahren nach einem der Ansprüche 47 bis 60, darüber hinaus mit Entschlüsseln einer vorab gemessenen charakteristischen Reaktionsinformation, wenn sie in verschlüsselter Form ausgelesen oder bereitgestellt wird.

62. Produkt mit der Sicherheitsvorrichtung nach einem der Ansprüche 1 bis 18.

63. Produkt nach Anspruch 62, mit einem oder mehreren der folgenden Elemente: einem Dokument, einem Paß, einem Ausweis, einer Kompaktdisk (CD), einer DVD, einem Softwareprodukt, einer Verpackung, einem Kleidungsstück, einem Schuhwerk, einer Chipkarte, einer Kredit- oder Bankkarte, einem kosmetischen Artikel, einem Bauteil, einem Zubehör und irgendeinem anderen Gegenstand und/oder Handelsgut, ob es hergestellt ist oder anderweitig existiert.

## Revendications

1. Dispositif de sécurité comprenant au moins un élément magnétique, dans lequel ledit au moins un élément magnétique est sensible à un champ magnétique appliqué pour fournir une réponse caractéristique, **caractérisé en ce que** ledit au moins un élément magnétique est un matériau magnétiquement doux qui comprend des défauts structurels qui provoquent un basculement en mode fragile dans lequel la croissance d'un seul domaine magnétique domine la variation de magnétisation d'un élément magnétique respectif.

2. Dispositif de sécurité selon la revendication 1, dans lequel ledit au moins un élément magnétique est supporté par un substrat.

3. Dispositif de sécurité selon la revendication 2, dans lequel ledit au moins un élément magnétique est supporté sur ledit substrat.

4. Dispositif de sécurité selon l'une quelconque des revendications précédentes, dans lequel ledit au moins un élément magnétique est sensible audit champ magnétique appliqué pour faire basculer la magnétisation ou la polarisation magnétique dudit au moins un élément magnétique.

5. Dispositif de sécurité selon la revendication 1, dans lequel ledit au moins un élément magnétique est un matériau magnétiquement doux sélectionné à partir d'un ou plusieurs éléments parmi : le nickel, le fer, le cobalt et les alliages de ceux-ci comportant l'un de ces éléments associé à un autre ou à du silicium, tels qu'un alliage de nickel-fer, un alliage de cobalt-fer, un alliage de fer-silicium ou un alliage de cobalt-silicium.

6. Dispositif de sécurité selon l'une quelconque des revendications précédentes, dans lequel ledit matériau magnétiquement doux est un matériau de Permalloy.

7. Dispositif de sécurité selon l'une quelconque des revendications précédentes, dans lequel ledit au moins un élément magnétique est globalement en forme de fil ou en forme de fil aplati.

8. Dispositif de sécurité selon l'une quelconque des revendications précédentes, dans lequel ledit au moins un élément magnétique est revêtu d'une couche réfléchissant la lumière.

9. Dispositif de sécurité selon l'une quelconque des revendications précédentes, dans lequel ledit au moins un élément magnétique est disposé à proximité d'une partie à réflectivité de lumière réduite dudit dispositif de sécurité.

10. Dispositif de sécurité selon l'une quelconque des revendications précédentes, comprenant une pluralité desdits au moins un éléments magnétiques.

11. Dispositif de sécurité selon la revendication 10, dans lequel ladite pluralité d'éléments magnétiques est agencée pour fournir une configuration linéaire.

12. Dispositif de sécurité selon la revendication 10, dans lequel ladite pluralité d'éléments magnétiques est agencée pour fournir une configuration à deux dimensions.

13. Dispositif de sécurité selon la revendication 11 ou la revendication 12, dans lequel ladite configuration code un identificateur.

14. Dispositif de sécurité selon l'une quelconque des revendications précédentes, comprenant en outre un identificateur unique incorporé à celui-ci.

15. Dispositif de sécurité selon la revendication 14, dans lequel ledit identificateur unique est fourni au moyen d'un ou plusieurs éléments parmi : un code à barres pouvant être lu optiquement, une ou plusieurs marques optiques, un identificateur codé magnétiquement et un identificateur électronique.

16. Dispositif de sécurité selon la revendication 15, monté sur une carte intelligente, où ledit identificateur électronique est fourni par une puce de carte intelligente disposée sur ladite carte intelligente.

17. Dispositif de sécurité selon l'une quelconque des revendications précédentes, dans lequel les informations de réponse caractéristique prémesurée représentant un ou plusieurs paramètres mesurables de ladite réponse caractéristique sont mémorisées sur ledit dispositif de sécurité.

18. Dispositif de sécurité selon la revendication 17, dans lequel lesdites informations de réponse caractéristique prémesurée sont sous forme cryptée.

19. Procédé de fabrication d'un dispositif de sécurité, comprenant :

la fourniture d'au moins un élément magnétique comprenant des défauts structurels, où ledit au moins un élément magnétique est un matériau magnétiquement doux qui fournit une réponse caractéristique de basculement en mode fragile en réponse à un champ magnétique appliqué.

20. Procédé selon la revendication 19, comprenant la fourniture dudit au moins un élément magnétique sur un substrat.

21. Procédé selon la revendication 19 ou la revendication 20, comprenant la formation dudit au moins un élément magnétique en utilisant un procédé de gravure à enlèvement ou par voie humide.

22. Procédé selon la revendication 19 ou la revendication 20, comprenant la formation dudit au moins un élément magnétique en utilisant un procédé de gravure par faisceau ionique.

**23.** Procédé selon l'une quelconque des revendications 19 à 22, comprenant la mesure de l'amplitude ou des amplitudes d'un ou plusieurs paramètres magnétiques dudit au moins un élément magnétique.

**24.** Procédé selon la revendication 23, comprenant la mesure d'une ou plusieurs valeurs parmi des valeurs de coercivité et de gigue.

**25.** Procédé selon la revendication 23 ou la revendication 24, comprenant l'utilisation de l'amplitude ou des amplitudes mesurées desdits un ou plusieurs paramètres magnétiques pour représenter les informations de réponse caractéristique prémesurée.

**26.** Procédé selon la revendication 25, comprenant le cryptage desdites informations de réponse caractéristique prémesurée.

**27.** Procédé selon la revendication 25 ou la revendication 26, comprenant la mémorisation desdites informations de réponse caractéristique prémesurée sous une forme cryptée ou non cryptée sur ledit dispositif de sécurité.

**28.** Procédé selon la revendication 25 ou la revendication 26, comprenant la mémorisation desdites informations de réponse caractéristique prémesurée sous forme cryptée ou non cryptée dans un support de mémorisation à distance dudit dispositif de sécurité.

**29.** Procédé selon la revendication 28, comprenant la mémorisation desdites informations de réponse caractéristique prémesurée sous une forme cryptée ou non cryptée dans une base de données.

**30.** Procédé selon l'une quelconque des revendications 19 à 29, comprenant en outre le fait de munir ledit dispositif de sécurité d'un identificateur unique.

**31.** Procédé selon la revendication 30 lorsqu'elle dépend de l'une quelconque des revendications 26 à 29, comprenant la mémorisation d'une représentation dudit identificateur unique en association avec lesdites informations de réponse caractéristique prémesurée.

**32.** Système destiné à lire un dispositif de sécurité, comprenant :

un système de génération de champ magnétique destiné à appliquer un champ magnétique à un dispositif de sécurité ; et
un système de détection destiné à mesurer un ou plusieurs paramètres représentatifs d'une réponse caractéristique mesurée de basculement en mode fragile dudit dispositif de sécurité en réponse audit champ magnétique,

où ledit système peut être mis en oeuvre pour comparer lesdits un ou plusieurs paramètres représentatifs d'une réponse caractéristique mesurée de basculement en mode fragile à un ou plusieurs paramètres respectifs d'une réponse caractéristique prémesurée de basculement en mode fragile pour déterminer si les paramètres mesurés et prémesurés respectifs sont globalement équivalents.

**33.** Système selon la revendication 32, dans lequel le système de génération de champ magnétique peut être mis en oeuvre pour appliquer un champ magnétique qui varie dans le temps à un dispositif de sécurité.

**34.** Système selon la revendication 32 ou la revendication 33, dans lequel un faisceau de lumière est utilisé pour interroger ledit dispositif de sécurité.

**35.** Système selon l'une quelconque des revendications 32 à 34, dans lequel ledit faisceau de lumière est un faisceau visible ou du proche infrarouge produit par une diode laser.

**36.** Système selon l'une quelconque des revendications 32 à 35, dans lequel lesdits paramètres représentent une ou plusieurs valeurs parmi les valeurs de coercivité et de gigue.

**37.** Système selon l'une quelconque des revendications 34 à 36, dans lequel ledit système de détection incorpore un dispositif de détection à effet Kerr magnéto-optique destiné à détecter les variations induites dans ledit faisceau de lumière par les éléments magnétiques dudit dispositif de sécurité.

**38.** Système selon la revendication 37, dans lequel ledit dispositif de détection à effet Kerr magnéto-optique est configuré pour fonctionner dans un mode transversal.

**39.** Système selon l'une quelconque des revendications 34 à 38, pouvant en outre être mis en oeuvre pour dévier ledit faisceau de lumière sur la surface dudit dispositif de sécurité.

**40.** Système selon l'une quelconque des revendications 32 à 39, pouvant en outre être mis en oeuvre pour lire un identificateur unique à partir dudit dispositif de sécurité.

**41.** Système selon la revendication 40, dans lequel ledit identificateur unique est identifié en reconnaissant une configuration d'éléments magnétiques supportés par ledit dispositif de sécurité.

**42.** Système selon la revendication 40 ou 41, dans lequel ledit identificateur unique est identifié en lisant un ou plusieurs éléments parmi : un code à barres pouvant être lu optiquement, une ou plusieurs marques optiques, un identificateur codé magnétiquement et un identificateur électronique.

**43.** Système selon l'une quelconque des revendications 32 à 42, pouvant en outre être mis en oeuvre pour déterminer lesdits un ou plusieurs paramètres respectifs de ladite réponse caractéristique prémesurée en lisant lesdits un ou plusieurs paramètres à partir dudit dispositif de sécurité.

**44.** Système selon l'une quelconque des revendications 32 à 43, pouvant en outre être mis en oeuvre pour déterminer lesdits un ou plusieurs paramètres respectifs de ladite réponse caractéristique prémesurée en lisant lesdits un ou plusieurs paramètres à partir d'une base de données.

**45.** Système selon la revendication 44, dans lequel ladite base de données est située à distance dudit système de détection.

**46.** Système selon l'une quelconque des revendications 32 à 45, pouvant en outre être mis en oeuvre pour décrypter les informations de réponse caractéristique prémesurée lorsqu'elles sont lues ou fournies sous une forme cryptée.

**47.** Procédé destiné à lire un dispositif de sécurité, comprenant :

l'application d'un champ magnétique à un dispositif de sécurité ;

la mesure d'un ou plusieurs paramètres représentatifs d'une réponse caractéristique mesurée de basculement en mode fragile dudit dispositif de sécurité en réponse audit champ magnétique ; et

la comparaison desdits un ou plusieurs paramètres représentatifs d'une réponse caractéristique mesurée de basculement en mode fragile à un ou plusieurs paramètres respectifs d'une réponse caractéristique prémesurée de basculement en mode fragile pour déterminer si les paramètres mesurés et prémesurés respectifs sont globalement équivalents.

**48.** Procédé selon la revendication 47, comprenant l'application d'un champ magnétique qui varie dans le temps à un dispositif de sécurité.

**49.** Procédé selon la revendication 47 ou la revendication 48, dans lequel la mesure d'un ou plusieurs paramètres représentatifs d'une réponse caractéristique mesurée dudit dispositif de sécurité en réponse audit champ magnétique comprend la mesure d'une ou plusieurs valeurs parmi les valeurs de coercivité et de gigue.

**50.** Procédé selon l'une quelconque des revendications 47 à 49, comprenant l'interrogation dudit dispositif de sécurité en utilisant un faisceau de lumière.

**51.** Procédé selon l'une quelconque des revendications 47 à 50, comprenant la mise en oeuvre d'un laser pour produire un faisceau visible ou du proche infrarouge.

**52.** Procédé selon la revendication 50 ou la revendication 51, comprenant la détection de variations induites dans ledit faisceau de lumière par des éléments magnétiques dudit dispositif de sécurité en utilisant l'effet Kerr magnéto-optique.

**53.** Procédé selon la revendication 52, comprenant l'utilisation du mode transversal à effet Kerr magnéto-optique.

**54.** Procédé selon l'une quelconque des revendications 50 à 53, comprenant la déviation dudit faisceau de lumière sur la surface dudit dispositif de sécurité.

**55.** Procédé selon l'une quelconque des revendications 47 à 54, comprenant la lecture d'un identificateur unique à partir dudit dispositif de sécurité.

**56.** Procédé selon la revendication 55, comprenant l'identification dudit identificateur unique en reconnaissant une configuration d'éléments magnétiques supportés par ledit dispositif de sécurité.

**57.** Procédé selon la revendication 55 ou 56, comprenant l'identification dudit identificateur unique en lisant un ou plusieurs éléments parmi : un code à barres pouvant être lu optiquement, une ou plusieurs marques optiques, un identificateur codé magnétiquement et un identificateur électronique.

**58.** Procédé selon l'une quelconque des revendications 47 à 57, comprenant la détermination desdits un ou plusieurs paramètres respectifs de la réponse caractéristique prémesurée en lisant lesdits un ou plusieurs paramètres à partir dudit dispositif de sécurité.

**59.** Procédé selon l'une quelconque des revendications 47 à 58, comprenant la détermination desdits un ou plusieurs paramètres respectifs de la réponse caractéristique prémesurée en lisant lesdits un ou plusieurs paramètres à partir d'une base de données.

**60.** Procédé selon la revendication 59, comprenant l'accès à une base de données située à distance dudit système de détection.

**61.** Procédé selon l'une quelconque des revendications 47 à 60, comprenant en outre le décryptage des informations de réponse caractéristique prémesurée lorsqu'elles sont lues ou fournies sous une forme cryptée.

**62.** Produit comprenant le dispositif de sécurité selon l'une quelconque des revendications 1 à 18.

**63.** Produit selon la revendication 62, comprenant un ou plusieurs éléments parmi : un document, un passeport, une carte d'identité, un disque compact, un disque polyvalent numérique, un produit logiciel, un conditionnement, des vêtements, des chaussures, une carte intelligente, une carte de crédit ou de banque, un article cosmétique, une pièce technique, un accessoire et n'importe quels autres marchandises et/ou articles du commerce, qu'ils soient fabriqués ou autres.

Fig. 1

Fig. 2

Fig. 3

Fig. 4

Fig. 5

Fig. 5a

Fig. 6

H

M

150

102

Fig. 7a

154    H    154

152    152    154    152

102

Fig. 7b

156    H

156    156'

102

Fig. 7c

H

158

102

Fig. 7d

160

162

164

169

169

174

169 169

168

172 170

Fig. 8a

180

182

184

194

196

Δ

186

192 190

Fig. 8b

704

Fig. 9a

714

704

Fig. 9b

706   708   706   701   708

706

704

Fig. 9c

706   710   706   710

706

704

Fig. 9d

41

710   702   712
706
704

**Fig. 9e**

706   710   718   716   712
704
702

**Fig. 9f**

720   718   702
704

**Fig. 9g**

720   718   722
704
700   702   702

**Fig. 9h**

Fig. 10

Fig. 11

Fig. 12

EP 1 537 525 B1

V

970

972

Fig. 13

V

994

999

998

997

996

995

t₀    t₁    t₂    t₃    t₄    t₅    t

Fig. 14

972

**Fig. 15**

973

975

977

**Fig. 16**

981

983

983

983

**Fig. 17**

Fig. 18

Fig. 19

Fig. 20

Fig. 21a

Fig. 21b

ABCDEFG

21

12345689

22

23

Fig. 22a

24

26        28

Fig. 22b

Fig. 23

Fig. 24

56

51

53

Fig. 25

68    62    61

63

64

Fig. 26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RP.COWBURN.** *Journal of Physics D,* 2000, vol. 33
- **K. J. KIRK ; J. N. CHAPMAN ; C. D. W. WILKINSON.** *J. Appl. Phys.,* 1999, vol. 85, 5237
- **AMIKAM AHARONI.** Introduction to the Theory of Ferromagnetism. 204-214
- **BOZORTH.** Ferromagnetism
- A Kerr magnetometer. *Applied Physics Letters,* 1998, vol. 73, 3947
- **W. H. PRESS ; S. A. TEUKOLSKY ; W. T. VETTERLING ; B. P. FLANNERY.** Numerical Recipes in C: The Art of Scientific Computing. Cambridge University Press, 1993
- **ADEYEYE et al.** Optimised process for the fabrication of mesoscopic magnetic structures. *Journal of Applied Physics,* 01 July 1997, vol. 82 (1), 469-473